(19) 

Europäisches
Patentamt
European
Patent Office
Office européen
des brevets

(11) **EP 3 579 564 A1**

(12) **EUROPEAN PATENT APPLICATION**
published in accordance with Art. 153(4) EPC

(43) Date of publication:
**11.12.2019 Bulletin 2019/50**

(51) Int Cl.:
*H04N 21/2343* (2011.01)   *H04N 5/765* (2006.01)
*H04N 19/85* (2014.01)

(21) Application number: **18747575.1**

(22) Date of filing: **18.01.2018**

(86) International application number:
**PCT/JP2018/001315**

(87) International publication number:
**WO 2018/142946 (09.08.2018 Gazette 2018/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **31.01.2017   JP 2017015365**

(71) Applicant: **Sony Corporation
Tokyo 108-0075 (JP)**

(72) Inventors:
• **HAMADA Toshiya
  Tokyo 108-0075 (JP)**
• **HIRABAYASHI Mitsuhiro
  Tokyo 108-0075 (JP)**

(74) Representative: **D Young & Co LLP
120 Holborn
London EC1N 2DY (GB)**

(54) **INFORMATION PROCESSING DEVICE AND METHOD**

(57)   The present disclosure relates to an information processing device and method that enable seamless reproduction of streams at different frame rates.

A frame rate reduction processing unit generates images at a plurality of different low frame rates from an input image. A single frame rate conversion unit converts the images at the plurality of different low frame rates, which are generated by the frame rate reduction processing unit, to images at a single frame rate. A compression encoding unit encodes the images at the single frame rate obtained through conversion by the single frame rate conversion unit. The present disclosure is applicable to a distribution system including a file generation device, a distribution server, and a reproduction terminal, for example.

F I G . 1 6

EP 3 579 564 A1

**Description**

[Technical Field]

The present disclosure relates to an information processing device and method, and in particular, to an information processing device and method that enable seamless reproduction of streams at different frame rates.

[Background Art]

Hitherto, in order to distribute video or music data by streaming via the Internet, MPEG-DASH (Moving Picture Experts Group phase-Dynamic Adaptive Streaming over HTTP) has been developed (for example, see NPL 1).
In distribution by MPEG-DASH, a client selects and acquires content at different bit rates depending on a variation in transmission band to continue reproduction.

[Citation List]

[Non Patent Literature]

[NPL 1] MPEG-DASH (Dynamic Adaptive Streaming over HTTP) (URL: http://mpeg.chiariglione.org/standards/mpeg-dash/media-presentation-description-and-segment-formats/text-isoiec-23009-12012-dam-1)

[Summary]

[Technical Problem]

In switching in MPEG-DASH, switching between videos different from each other only in bit rate is supposed, and a method for seamlessly switching streams at different frame rates has not been provided as a standard, for example.
A player can switch video streams having different parameters by its own function. In such a case, however, special considerations have to be made for encoding; otherwise discontinuity in decoding generally occurs upon stream switching, resulting in a difficulty in seamless reproduction.
The present disclosure has been made in view of such circumstances, and enables seamless reproduction of streams at different frame rates.

[Solution to Problem]

According to a first aspect of the present technology, there is provided an information processing device including: a low frame rate generation unit configured to generate images at a plurality of different low frame rates from an input image; a single frame rate conversion unit configured to convert the images at the plurality of different low frame rates, the images being generated by the low frame rate generation unit, to images at a single frame rate; and an encoding unit configured to encode the images at the single frame rate obtained through conversion by the single frame rate conversion unit.
The information processing device can further include an arrangement unit configured to arrange information associated with a frame rate as metadata for the images encoded.
The metadata can include a net frame rate representing the plurality of different low frame rates generated by the low frame rate generation unit.
The metadata can include a method for generating the low frame rates by the low frame rate generation unit.
The metadata can include an original frame rate before the images at the low frame rates are generated by the low frame rate generation unit.
The metadata can include information representing whether a still image available for a thumbnail is extractable from the images at the single frame rate obtained through conversion by the single frame rate conversion unit.
The arrangement unit can arrange the metadata to an MPD file.
The arrangement unit can arrange the metadata to an MP4 file.
The information processing device can further include a sending unit configured to send content including the metadata arranged by the arrangement unit and the images encoded.
According to the first aspect of the present technology, there is provided an information processing method including: by an information processing device, generating images at a plurality of different low frame rates from an input image; converting the images at the plurality of different low frame rates generated to images at a single frame rate; and encoding the images at the single frame rate obtained through conversion.

According to a second aspect of the present technology, there is provided an information processing device including: an acquisition unit configured to acquire metadata that is information associated with a frame rate for content that is sent, the content being obtained by generating images at a plurality of different low frame rates from an input image, and by converting the images at the plurality of different low frame rates generated to images at a single frame rate; and a content selection unit configured to select, depending on a current transmission bandwidth, content including an image at the single frame rate based on the metadata acquired by the acquisition unit, the image being obtained by converting an optimum low frame rate image.

The metadata can include a net frame rate representing the plurality of different low frame rates.

The metadata can include a method for generating the low frame rates.

The metadata can include an original frame rate before the images at the plurality of different low frame rates are generated.

The metadata can include information representing whether a still image available for a thumbnail is extractable from the images at the single frame rate obtained through conversion.

The metadata can be arranged to an MPD file to be sent.

The metadata can be arranged to an MP4 file to be sent.

The information processing device can further include a reception unit configured to receive the content selected by the content selection unit.

According to the second aspect of the present technology, there is provided an information processing method including: by an information processing device, acquiring metadata that is information associated with a frame rate for content that is sent, the content being obtained by generating images at a plurality of different low frame rates from an input image, and by converting the images at the plurality of different low frame rates generated to images at a single frame rate; and selecting, depending on a current transmission bandwidth, content including an image at the single frame rate based on the metadata acquired, the image being obtained by converting an optimum low frame rate image.

In the first aspect of the present technology, images at a plurality of different low frame rates are generated from an input image, and the generated images at the plurality of different low frame rates are converted to images at a single frame rate. Then, the images at the single frame rate obtained through conversion are encoded.

In the second aspect of the present technology, metadata that is information associated with a frame rate for content that is sent is acquired, the content being obtained by generating images at a plurality of different low frame rates from an input image and converting the generated images at the plurality of different low frame rates to a single frame rate. Then, depending on a current transmission bandwidth, content including an image at the single frame rate is selected on the basis of the acquired metadata, the image being obtained by converting an optimum low frame rate image.

[Advantageous Effects of Invention]

According to the present disclosure, information can be processed. In particular, streams at different frame rates can be seamlessly reproduced.

[Brief Description of Drawings]

[FIG. 1]

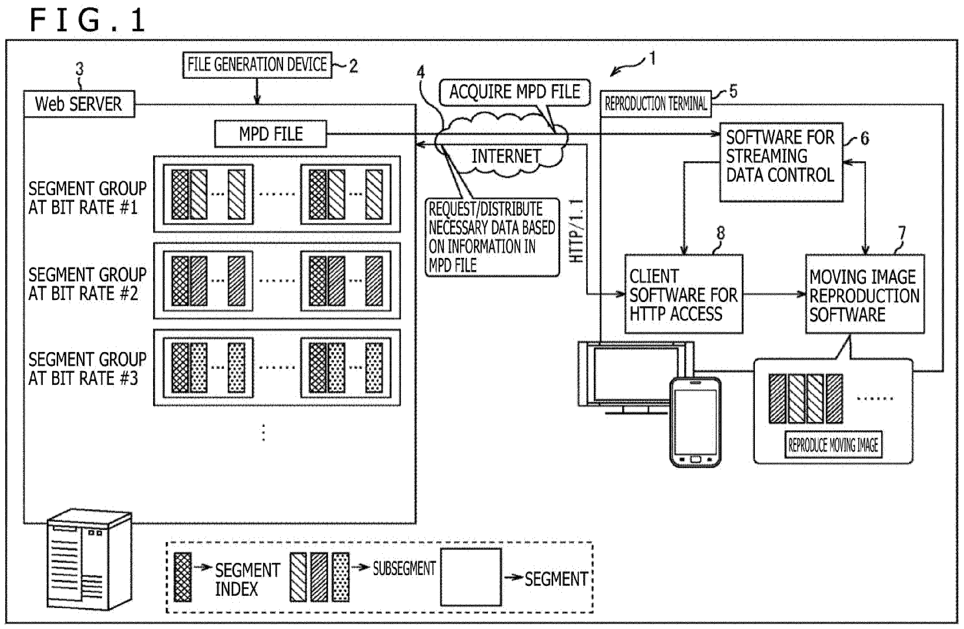

FIG. 1 is a diagram illustrating an example of data transmission using MPEG-DASH.
[FIG. 2]

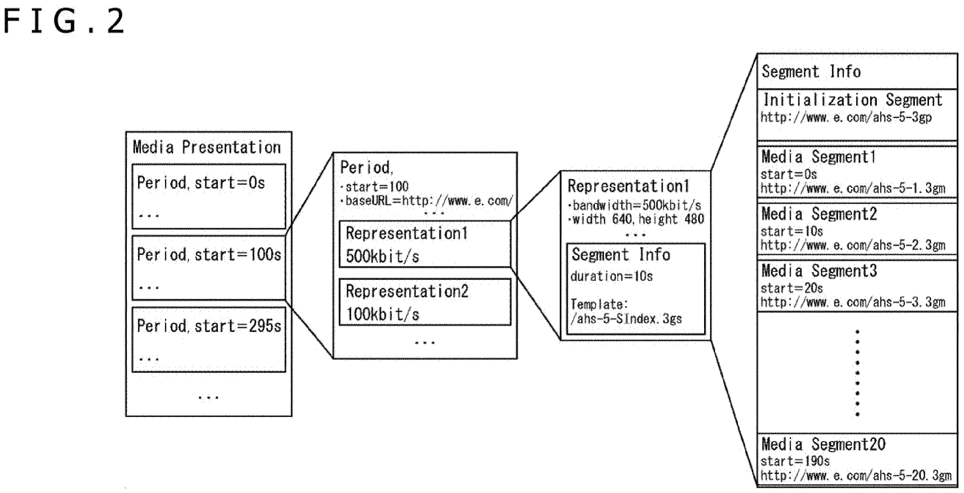

FIG. 2 is a diagram illustrating a configuration example of an MPD.
[FIG. 3]

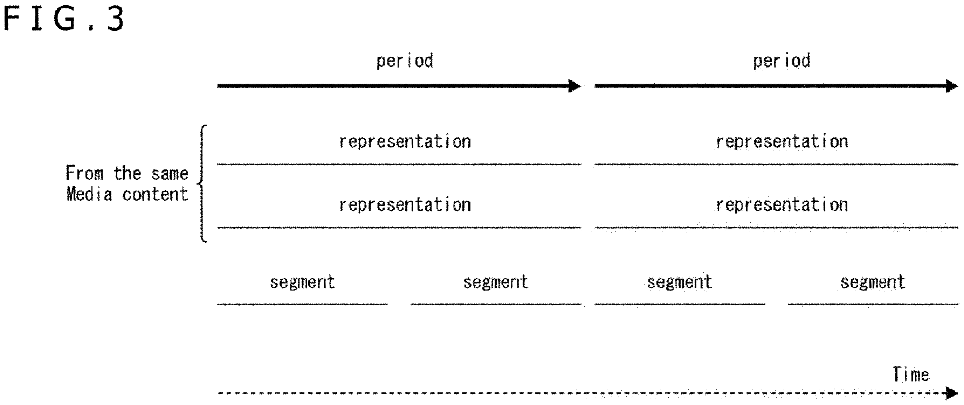

FIG. 3 is a diagram illustrating sections of content based on time.
[FIG. 4]

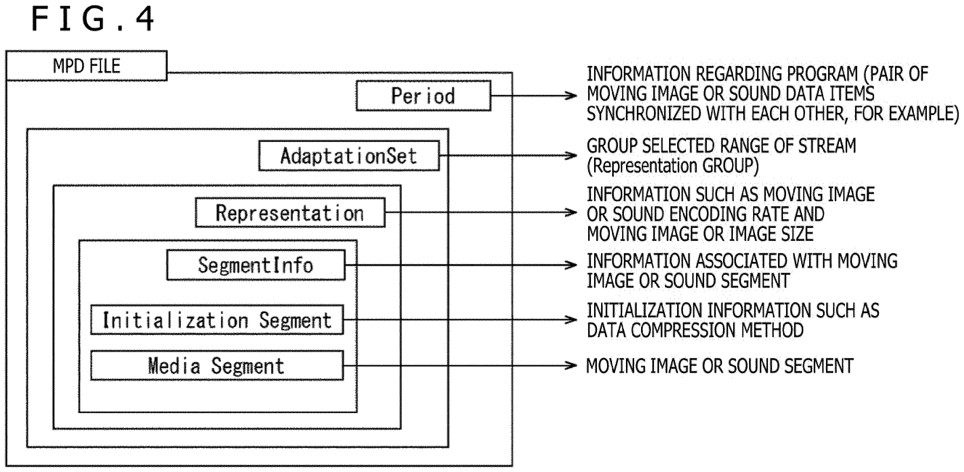

FIG. 4 is a diagram illustrating an example of a hierarchical structure including a Period and below in the MPD.
[FIG. 5]

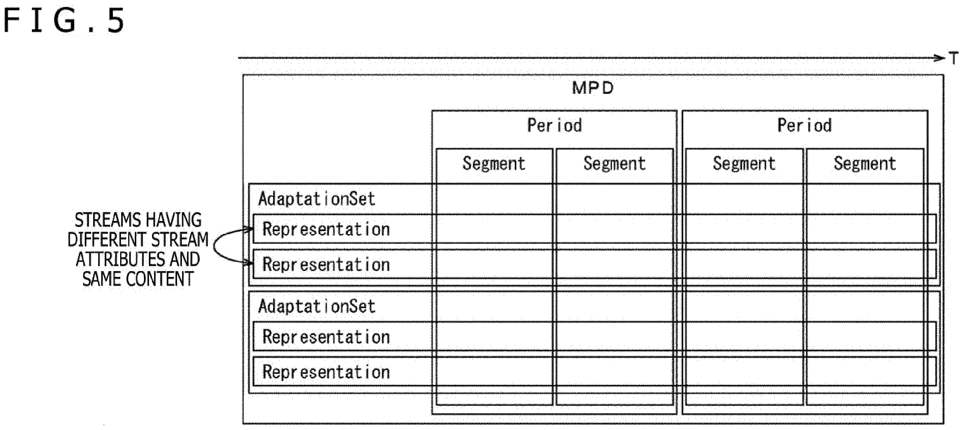

FIG. 5 is a diagram illustrating a configuration example of the MPD file on a time axis.
[FIG. 6]

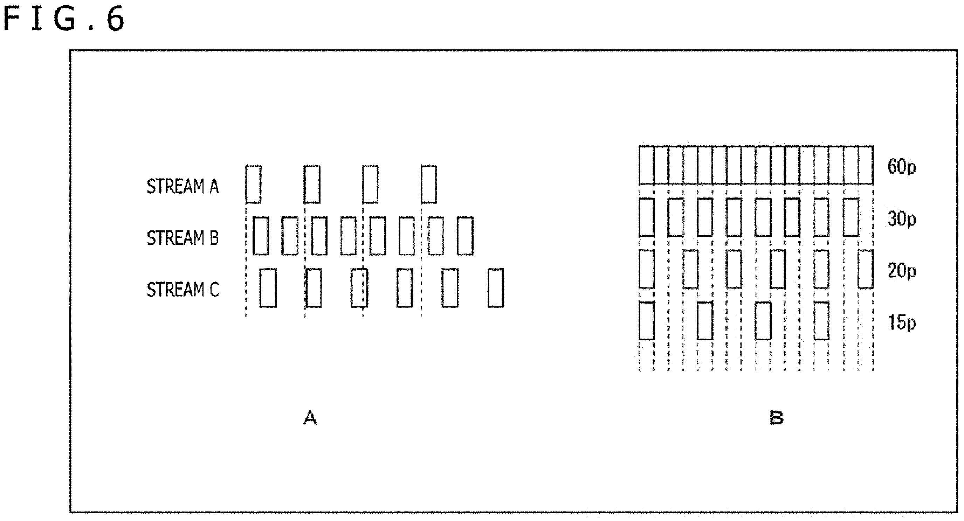

FIG. 6 is a diagram illustrating stream switching.
[FIG. 7]

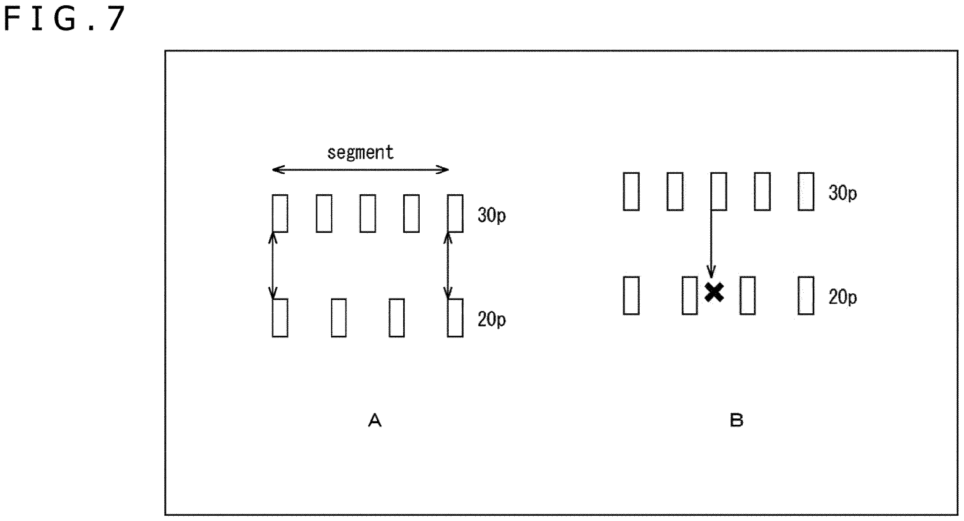

FIG. 7 is a diagram illustrating switching from one stream to a generated stream at a different frame rate.
[FIG. 8]

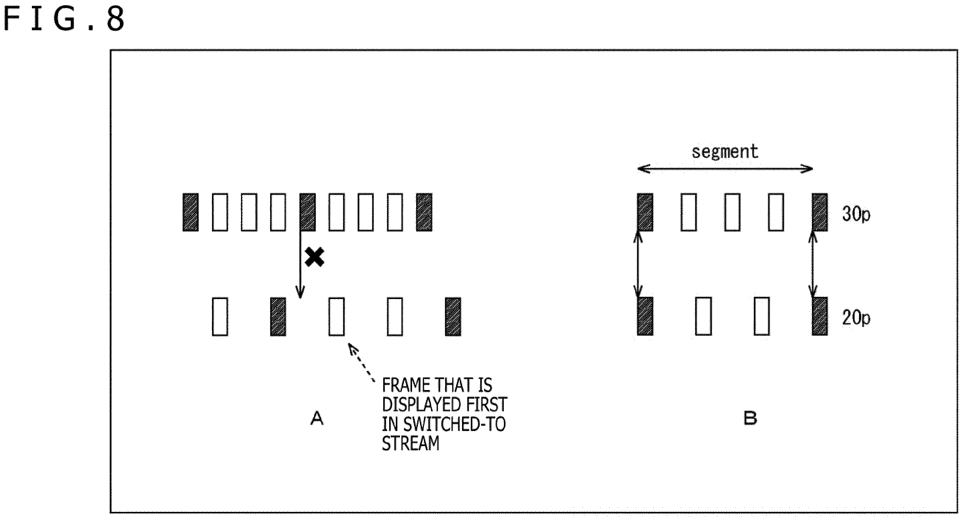

FIG. 8 is a diagram illustrating encoding with streams at different frame rates.

[FIG. 9]

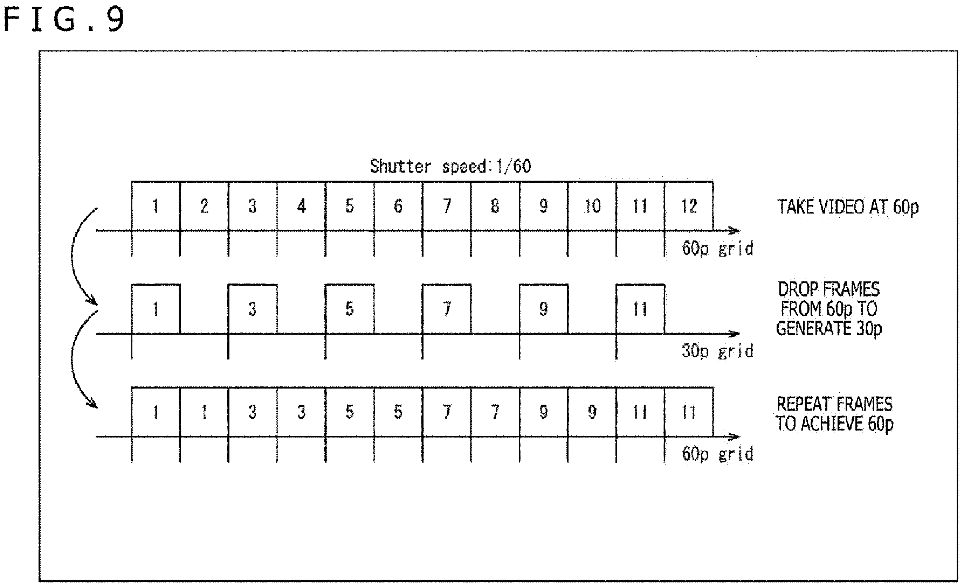

FIG. 9 is a diagram illustrating frame rate conversion according to the present technology.

[FIG. 10]

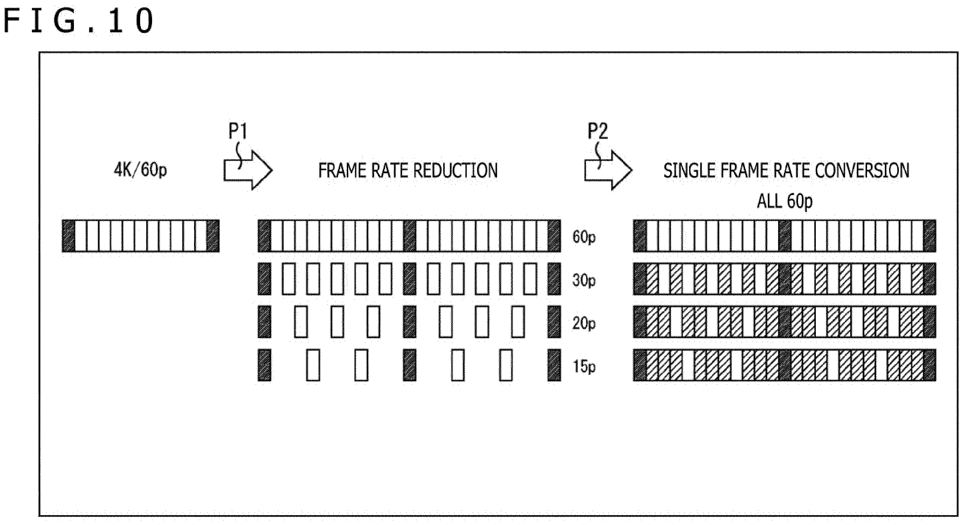

FIG. 10 is a diagram illustrating procedures of frame rate conversion according to the present technology.

[FIG. 11]

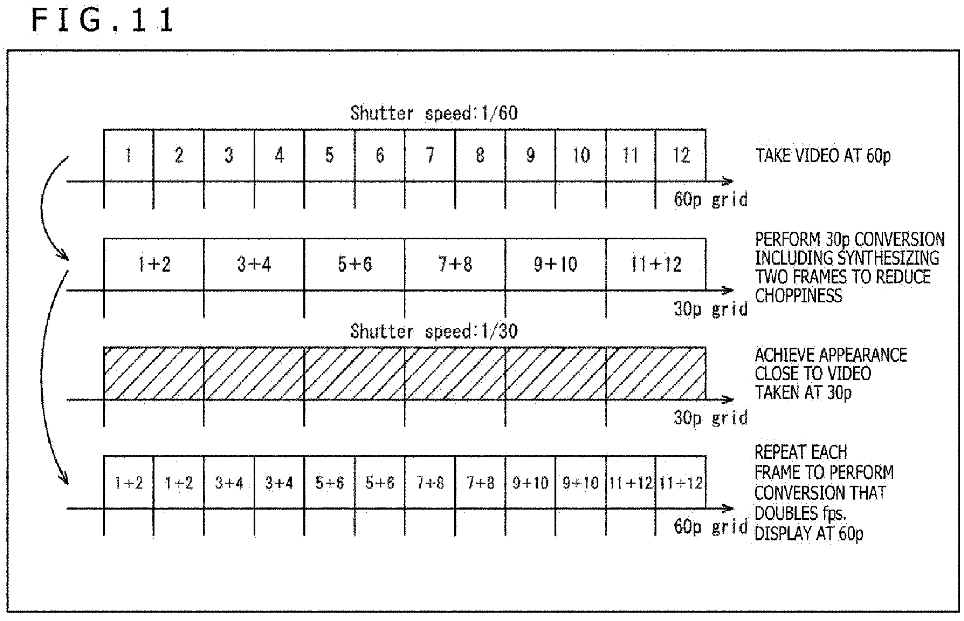

FIG. 11 is a diagram illustrating a frame rate conversion method including adjacent frame synthesis.

[FIG. 12]

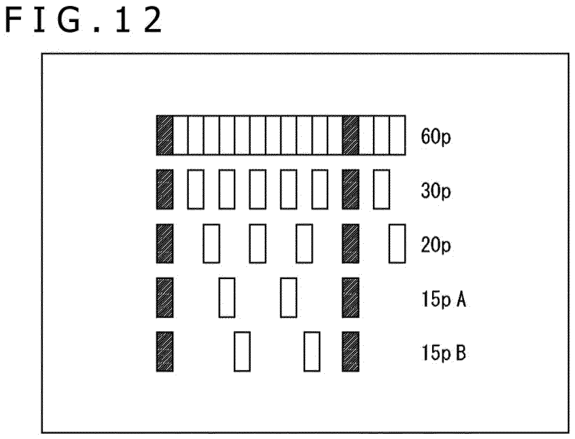

FIG. 12 is a diagram illustrating an example in which single frame rate conversion is not performed.

[FIG. 13]

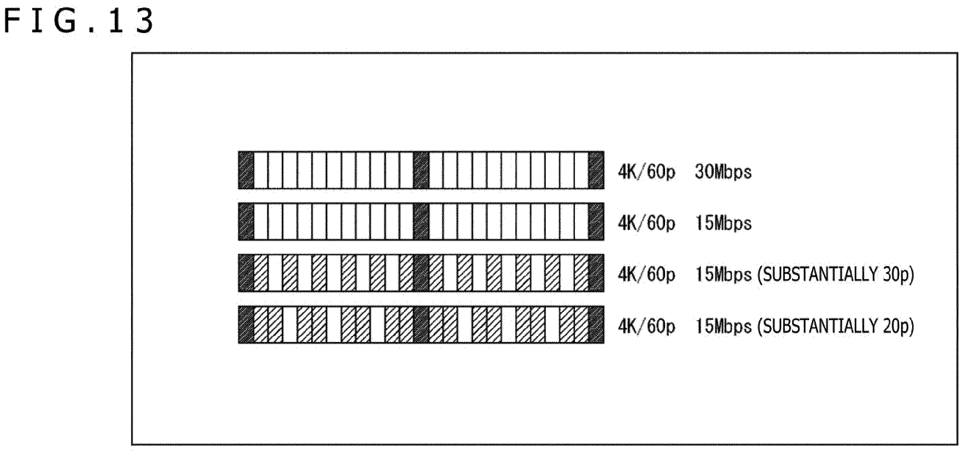

FIG. 13 is a diagram illustrating necessity of a substantial (net) frame rate.

[FIG. 14]

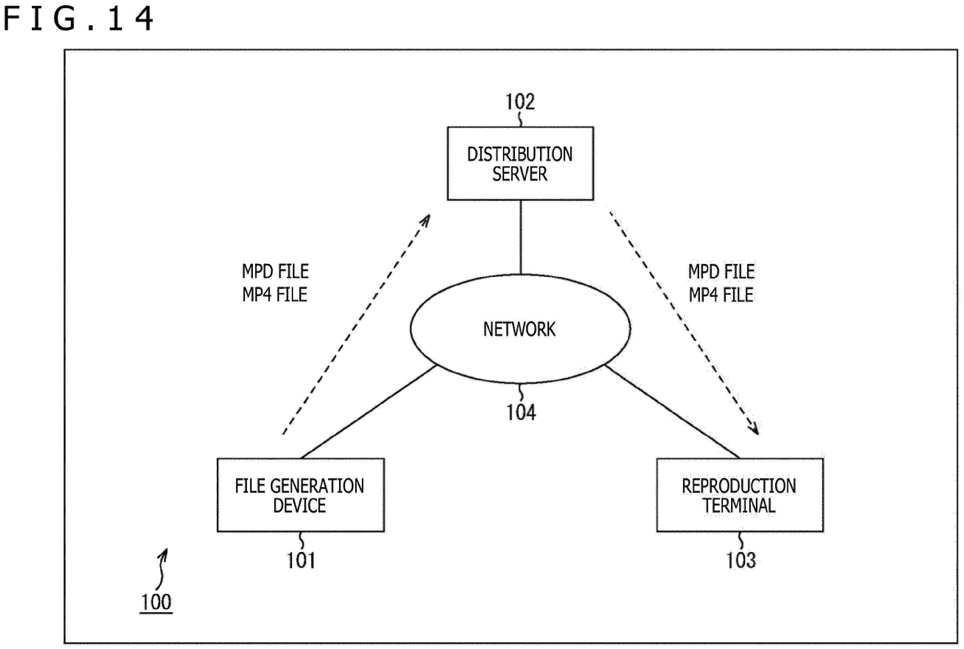

FIG. 14 is a block diagram illustrating a configuration example of a distribution system to which the present technology is applied.

[FIG. 15]

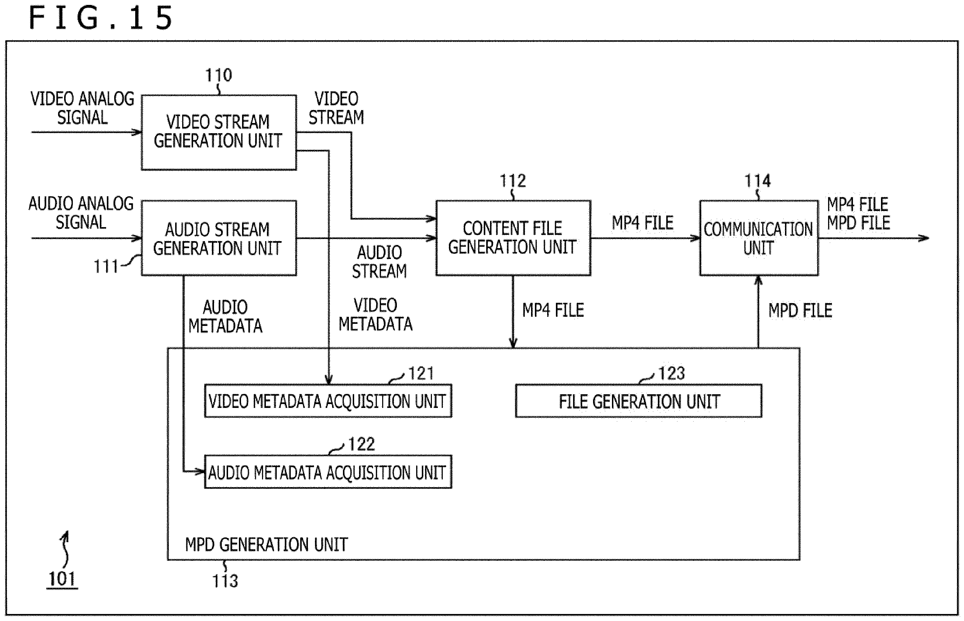

FIG. 15 is a block diagram illustrating an example of the main configuration of a file generation device.

[FIG. 16]

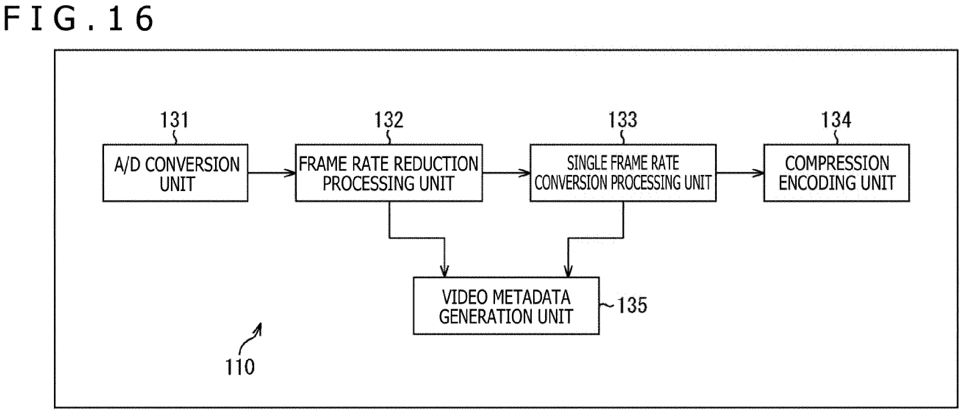

FIG. 16 is a block diagram illustrating a configuration example of a video stream generation unit.

[FIG. 17]

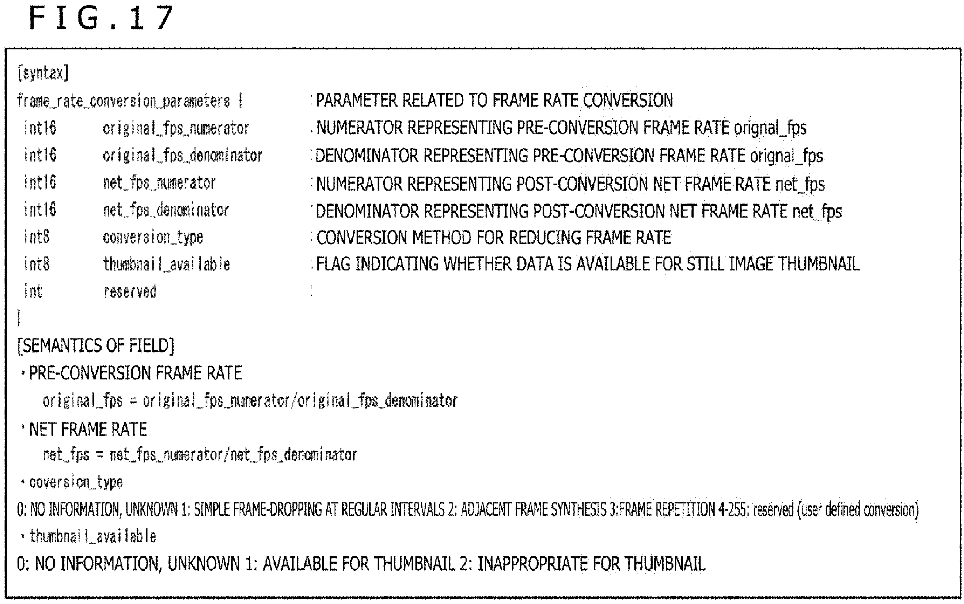

FIG. 17 is a diagram illustrating an example of metadata.

[FIG. 18]

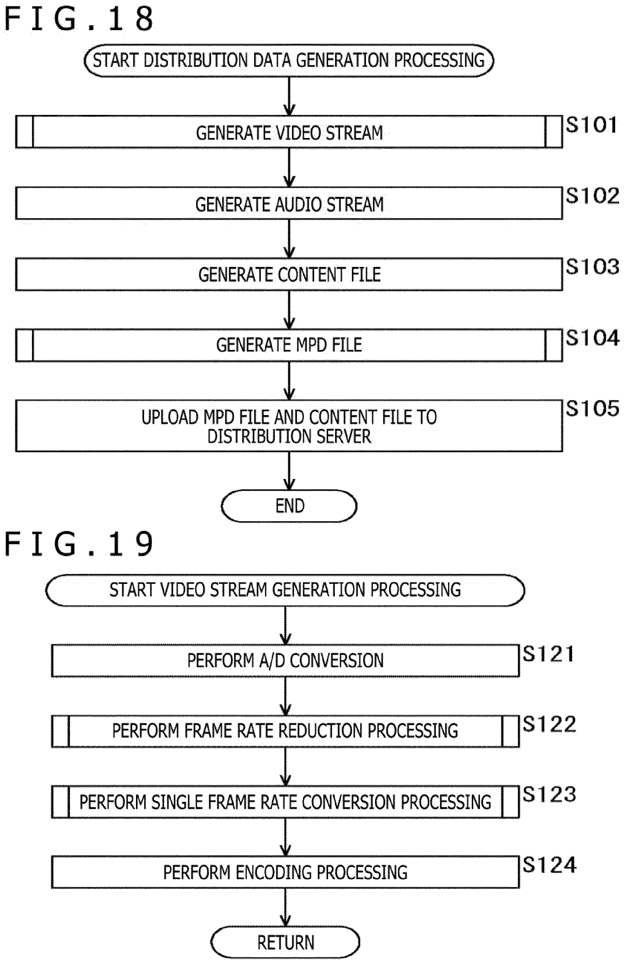

FIG. 18 is a flowchart illustrating distribution data generation processing by the file generation device.

[FIG. 19]

FIG. 19 is a flowchart illustrating video stream generation processing.

[FIG. 20]

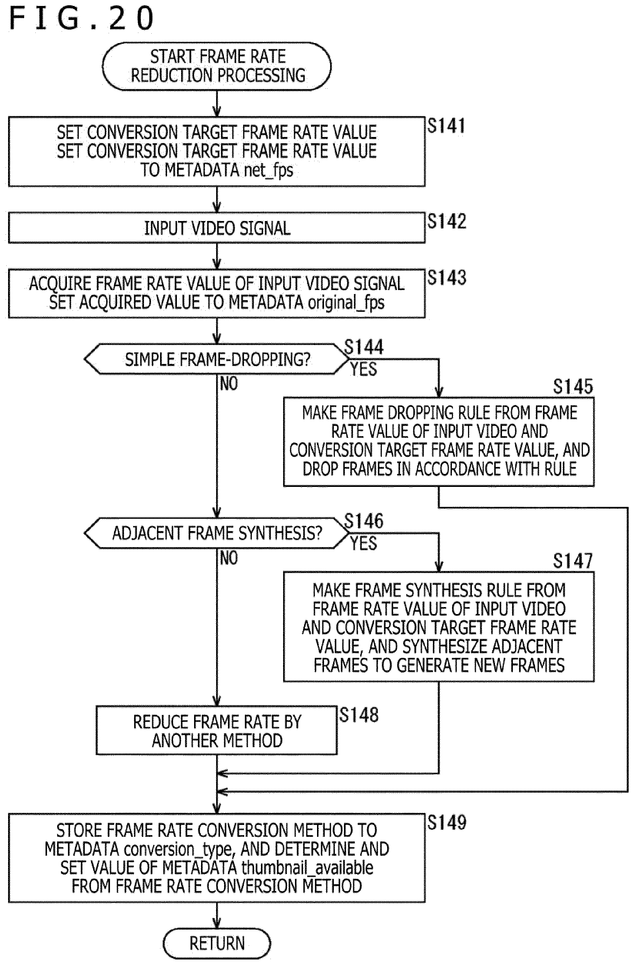

FIG. 20 is a flowchart illustrating frame rate reduction processing.

[FIG. 21]

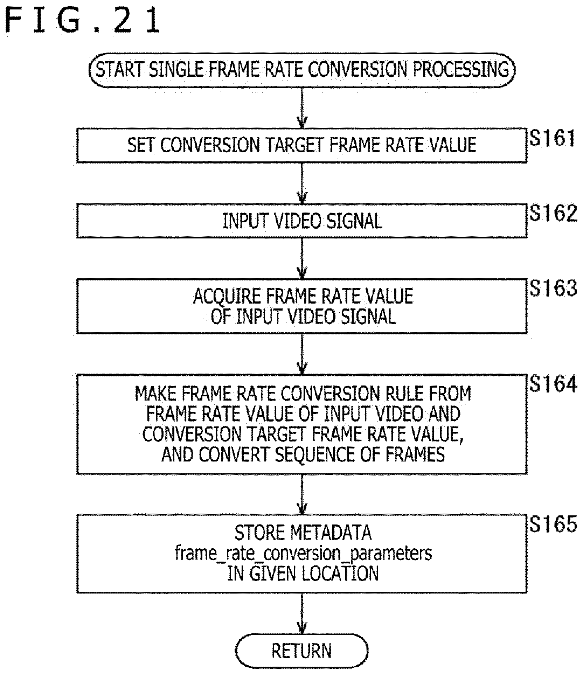

FIG. 21 is a flowchart illustrating single frame conversion processing.

[FIG. 22]

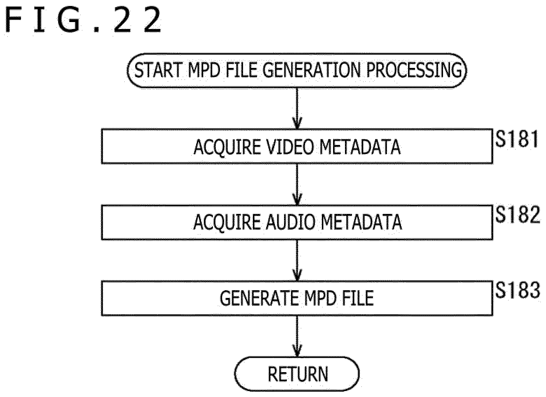

FIG. 22 is a flowchart illustrating MPD file generation processing.

[FIG. 23]

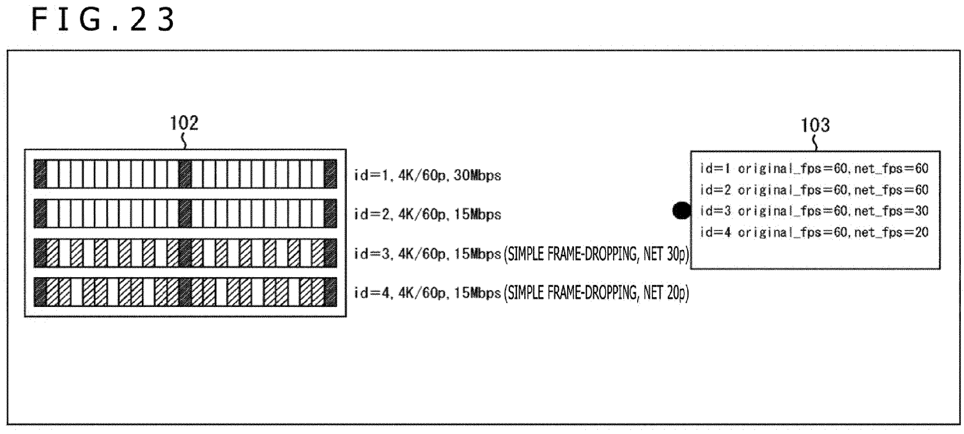

FIG. 23 is a diagram illustrating operation of a reproduction terminal.

[FIG. 24]

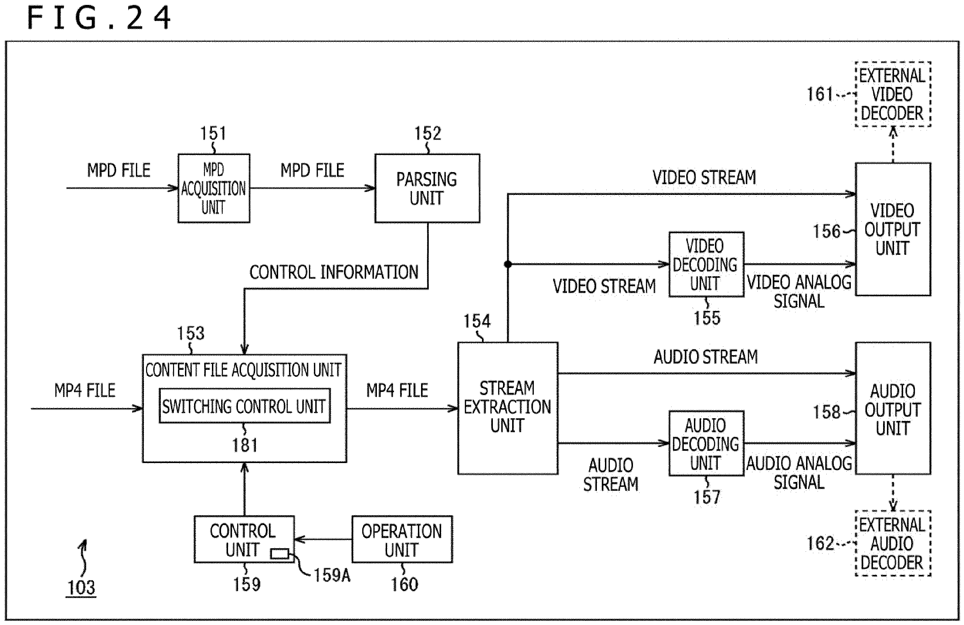

FIG. 24 is a block diagram illustrating an example of a main configuration of the reproduction terminal.

[FIG. 25]

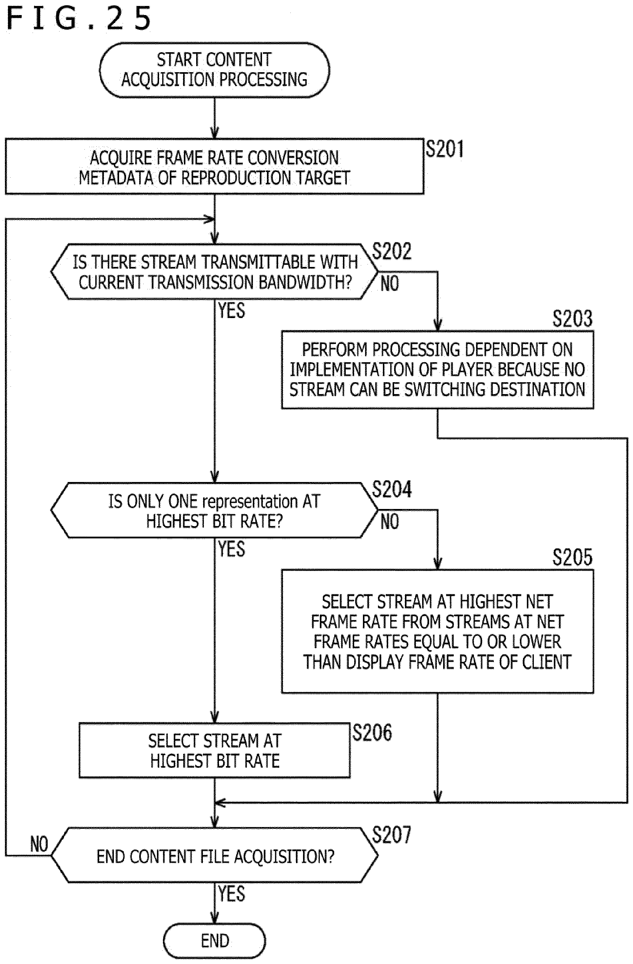

FIG. 25 is a flowchart illustrating content acquisition processing by the reproduction terminal.

[FIG. 26]

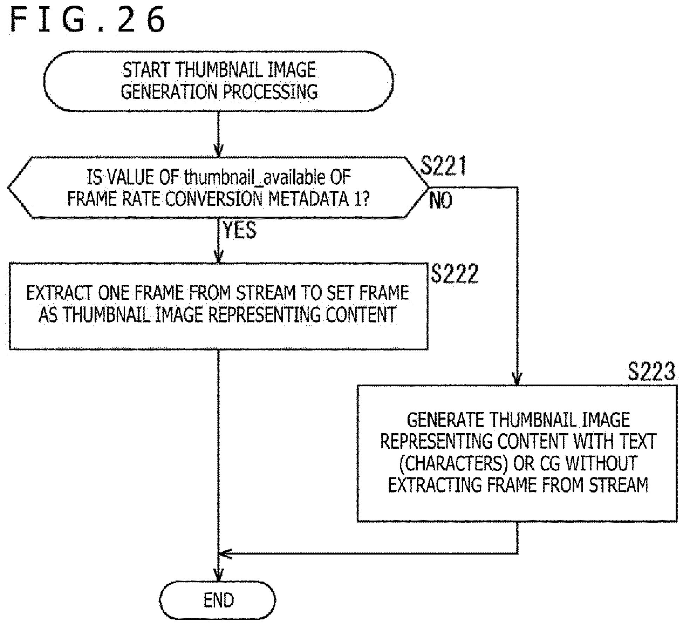

FIG. 26 is a flowchart illustrating thumbnail image generation processing by the reproduction terminal.

[FIG. 27]

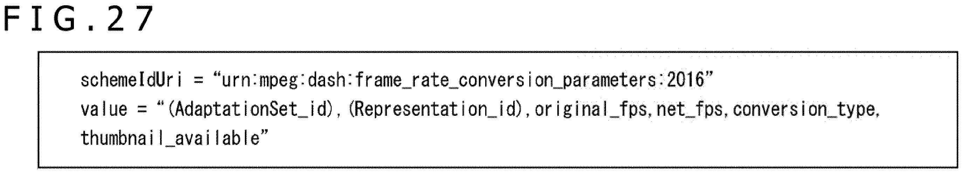

FIG. 27 is a diagram illustrating an example of a case where the metadata is stored in the MPD.

[FIG. 28]

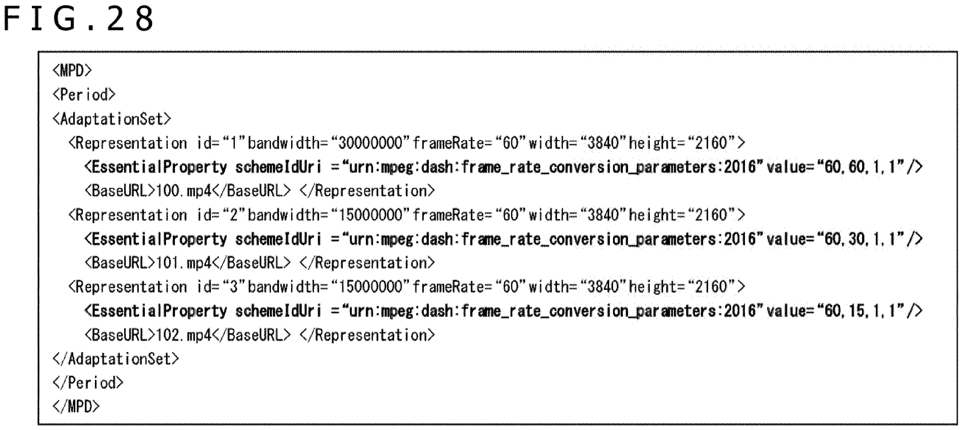

FIG. 28 is a diagram illustrating an example of a case where the metadata is applied to a Representation.

[FIG. 29]

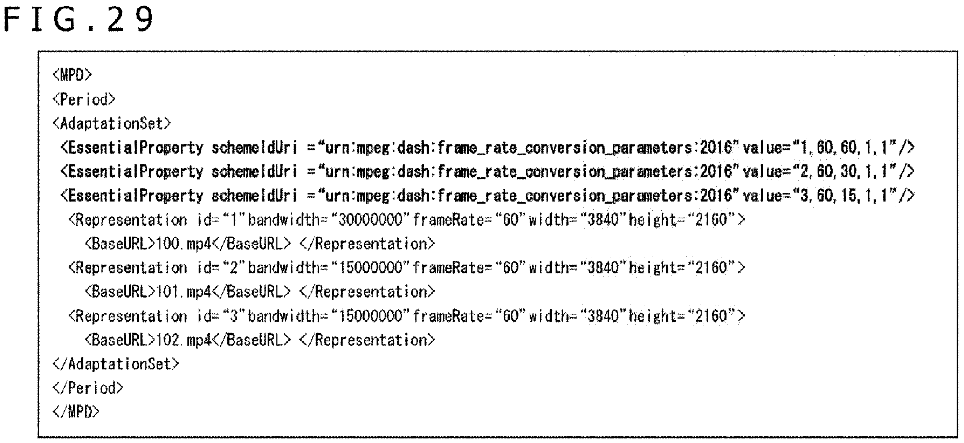

FIG. 29 is a diagram illustrating an example of a case where the metadata is applied to an AdaptationSet.

[FIG. 30]

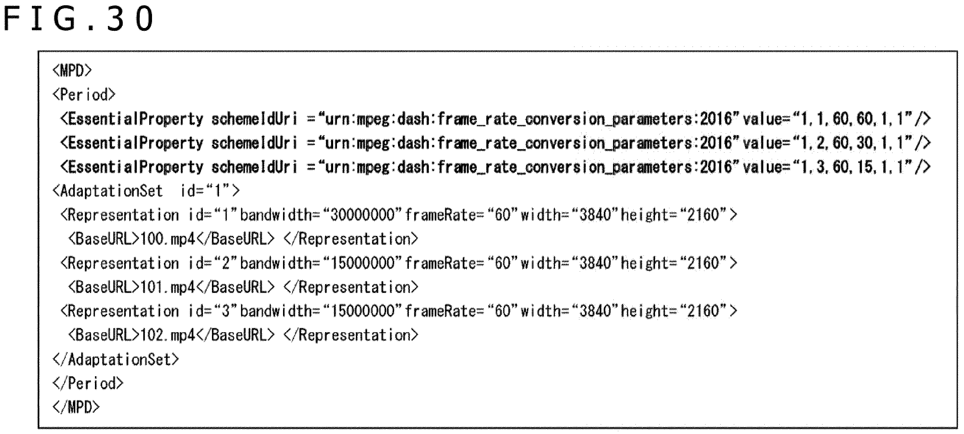

FIG. 30 is a diagram illustrating an example of a case where the metadata is applied to the Period.

[FIG. 31]

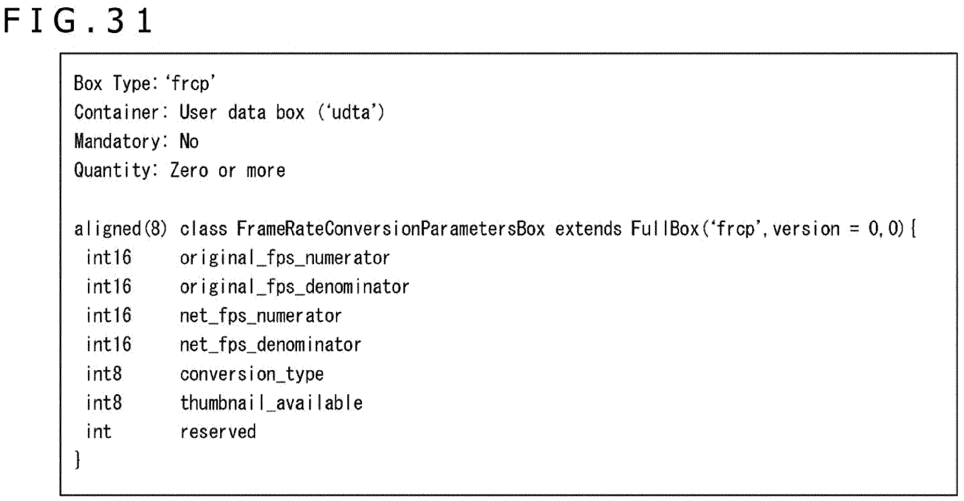

FIG. 31 is a diagram illustrating an example of a case where the metadata is described in a system layer (moov) of an MP4.

[FIG. 32]

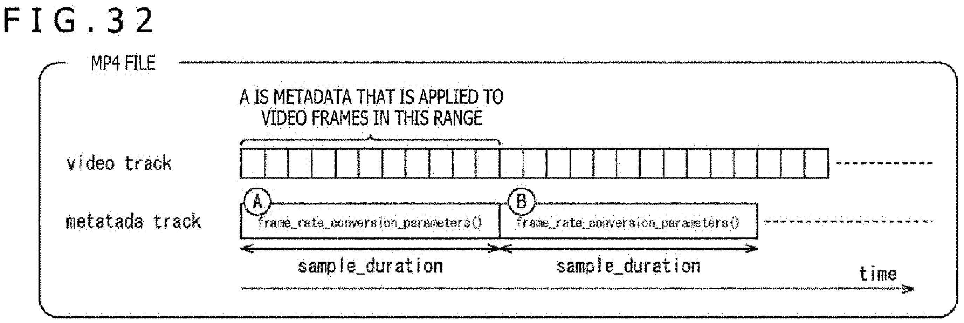

FIG. 32 is a diagram illustrating an example of a case where the metadata is described in a video track of the MP4.

[FIG. 33]

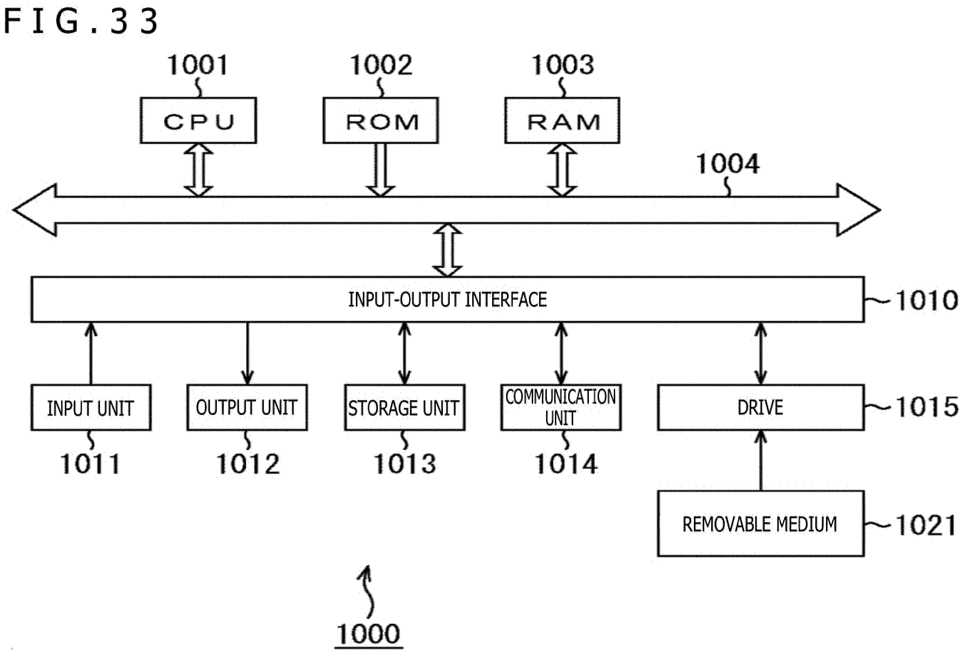

FIG. 33 is a block diagram illustrating a configuration example of computer hardware.

[Description of Embodiments]

Now, modes for carrying out the present disclosure (hereinafter referred to as "embodiment") are described. Note that, the following items are described in order.

1. Bit Rate Switching
2. First Embodiment (Distribution System)
3. Second Embodiment (Computer)

<1. Bit Rate Switching>

<Distribution of Video or Sound>

In recent years, as means for delivering videos and music to consumers, distribution by streaming via the Internet has been expected. However, the Internet, which is transmission means, is more unstable in transmission than broadcasting and optical discs. First, the highest rate of a transmission band is greatly changed depending on user environments. In addition, even for the same user, the transmission band is not fixed and is changed over time. Further, the fact that the transmission band is changed means that response time to a request from the client is not constant.

As a standard for such transmission via the Internet, MPEG-DASH (Moving Picture Experts Group-Dynamic Adaptive Streaming over HTTP) has been developed. MPEG-DASH is a pull model in which a plurality of files having different data sizes are put on a server, and a client refers to an MPD (Media Presentation Description) to select an optimum file. With the use of http, which is not a special protocol, a general HTTP (HyperText Transfer Protocol) server can be used. As file formats, not only MPEG-TS (Moving Picture Experts Group-Transport Stream) but also ISOBMFF (International Organization for Standardization Base Media File Format) is used.

<MPEG-DASH>

FIG. 1 illustrates an example of data transmission using MPEG-DASH. In an information processing system 1 of FIG. 1, a file generation device 2 generates, as moving image content, video data or audio data, and encodes the data to convert the data to a file in a file format for transmission. For example, the file generation device 2 converts these pieces of data to files (segments) every 10 seconds or so. The file generation device 2 uploads the generated segment file to a Web server 3. Further, the file generation device 2 generates an MPD file (management file) for managing the moving image content, and uploads the MPD file to the Web server 3.

The Web server 3, which serves as a DASH server, distributes the moving image content file generated by the file generation device 2 to a reproduction terminal 5 in real time via an internet 4 by a method based on MPEG-DASH. For example, the Web server 3 stores the segment file or the MPD file uploaded from the file generation device 2. Further, the Web server 3 sends, in response to a request from the reproduction terminal 5, the stored segment file or MPD file to the reproduction terminal 5.

The reproduction terminal 5 (reproduction device) executes software for streaming data control (hereinafter also referred to as "control software") 6, moving image reproduction software 7, client software for HTTP access (hereinafter referred to as "access software") 8, and other software.

The control software 6 is software for controlling data to be delivered by streaming from the Web server 3. For example, the control software 6 acquires the MPD file from the Web server 3. Further, for example, the control software 6 commands the access software 8 to send a sending request for the segment file that is a reproduction target, on the basis of the network bandwidth of the internet 4 and reproduction time point information representing, for example, a reproduction time point that is specified by the MPD file or the moving image reproduction software 7.

The moving image reproduction software 7 is software for reproducing the encoded stream acquired from the Web server 3 via the internet 4. For example, the moving image reproduction software 7 specifies the reproduction time point information to the control software 6. Further, when acquiring a notification indicating reception start from the access software 8, the moving image reproduction software 7 decodes the encoded stream that is supplied from the access software 8. The moving image reproduction software 7 outputs video data or audio data obtained as a result of decoding.

The access software 8 is software for controlling communication with the Web server 3 with the use of HTTP. For example, the access software 8 supplies the notification indicating reception start to the moving image reproduction software 7. Further, the access software 8 sends, in response to the command from the control software 6, the sending request for the encoded stream of the segment file that is the reproduction target to the Web server 3. In addition, the access software 8 receives the segment file at a bit rate depending on a communication environment or other factors, the segment file being sent from the Web server 3 in response to the sending request. Then, the access software 8 extracts the encoded stream from the received file, and supplies the encoded stream to the moving image reproduction software 7.

<MPD>

Next, the MPD is described. The MPD has, for example, a configuration as illustrated in FIG. 2. In MPD parsing, a client (the reproduction terminal 5 in the example of FIG. 1) selects an optimum attribute from attributes of Representations included in a Period of the MPD (Media Presentation of FIG. 2).

The client reads the first Segment of the selected Representation to acquire and process an Initialization Segment. Subsequently, the client acquires the following Segments for reproduction.

Note that, the Period, the Representation, and the Segment in the MPD have relationship as in FIG. 3. That is, one media content can be managed for each Period that is a data unit in the time direction, and each Period can be managed for each Segment that is a data unit in the time direction. Further, for each Period, a plurality of Representations having different attributes such as bit rates can be configured.

That is, the file of the MPD (also referred to as "MPD file") has a hierarchical structure including the Period and below as illustrated in FIG. 4. Further, FIG. 5 is an example in which this MPD structure is placed on the time axis. As is apparent from the example of FIG. 5, a plurality of Representations are present in the same Segment. The client adaptively selects one of these Representations, thereby being capable of acquiring and reproducing appropriate stream data depending on a communication environment, its own decoding capability, or other factors.

<Method for Continuing Reproduction>

In MPEG-DASH distribution, it is necessary, in some cases, to prepare a file at a low bit rate to the server so that reproduction can be continued even in a case where the transmission bandwidth is reduced. As a method for achieving a low bit rate while reducing a deterioration in image quality as much as possible, a method including lowering image resolution and then performing compression encoding is effective. Meanwhile, a method including lowering the frame rate of a video to reduce a data size before encoding and thus lower a compression ratio, to thereby maintain the image quality is also conceivable. The rate of data input to an encoder is proportional to a frame rate, and hence in order to reduce the amount of information of an image before compression, it is remarkably effective to lower the frame rate.

The simplest method for reducing a video frame rate is dropping frames at regular intervals. Dropping frames every other frame achieves 1/2 of a frame rate, and dropping frames every third frames achieves 2/3 of a frame rate.

As illustrated in A of FIG. 6, in stream switching, when one of different streams A to C is switched to another stream, a display gap possibly occurs due to a mismatch in display phase. Note that, in the example of FIG. 6, the rectangles represent video frames. The same holds true in the figures referred to below.

As illustrated in B of FIG. 6, in a case where videos at a plurality of low frame rates (30p, 20p, and 15p) are generated from a certain input video (60p), on the other hand, the display phase of each frame is maintained, and hence a gap due to a difference in display phase does not occur in stream switching. As a consequence, the streams can be seamlessly switched.

In the example of FIG. 7, the video at 30p and the video at 20p generated from the video at 60p in B of FIG. 6 are illustrated. In the video at 30p and the video at 20p, frames having display start time points being matched with each other periodically arrive as illustrated in A of FIG. 7, and the streams can be switched only at these frames. In the video at 30p and the video at 20p, however, frame reproduction times are different from each other as illustrated in B of FIG. 7, and hence it is difficult to seamlessly switch the streams at arbitrary frames.

Further, when streams at different frame rates are subjected to compression encoding without special restrictions, as illustrated in A of FIG. 8, the cycles of pictures (IDR picture and I picture) at which decoding can start are not matched with each other. As a consequence, switching of a stream to a stream at another frame rate immediately before an I picture results in discontinuous decoding because the switched-to stream is not started from the I picture. Note that, in the example of FIG. 8, the solid black rectangles represent pictures (frames) at which decoding can start. The same holds true in the figures referred to below.

In MPEG-DASH, switching between Representations at the same frame rate is supposed, and a rule enabling stream switching at the boundary of Segments (Representation switching in AdaptationSet) is added. The rule is, for example, a restriction that the beginning of a Segment is a picture at which decoding can start such as the I picture or the IDR picture as illustrated in B of FIG. 8. In a case where streams at different frame rates are switched, it is also necessary to devise a configuration in which a place where the display time points of the frames are matched with each other is set as the boundary of Segments.

Current MPEG-DASH has, however, not been developed in consideration of seamless switching of streams (Representations) at different frame rates in the first place.

Related-art reproduction apparatuses such as broadcast receivers have been developed to display videos at fixed frame rates. The reproduction apparatus has not been developed in consideration of a frame rate that is changed while a program is being on the air or content is being reproduced, and hence when a video at a different frame rate is input to the reproduction apparatus, in general, the video possibly breaks up to turn into a black image or a fuzzy image.

As described above, in general, it has not been easy for a display device to seamlessly switch streams at different frame rates.

<Frame Rate Reduction and Single Frame Rate Conversion>

In view of this, for example, in creation of streams having a bit rate variation in MPEG-DASH content creation, streams at different frame rates are created by the following procedures.

(1) From a certain input video, videos at a plurality of frame rates each of which is a lowered frame rate are generated.
(2) The videos are converted to videos at a single frame rate.
(3) Compression encoding is performed.

Note that, with regard to (1), the frame rate is reduced by a method including dropping frames at regular intervals (simple frame-dropping), for example. With regard to (2), conversion is performed to increase the frame rate. The frames are repeated in accordance with a certain rule to increase the frame rate, to thereby convert the stream to a stream at the single frame rate. In compression encoding of (3), decoding start points are matched with each other. In the case of H.264/AVC or H.265/HEVC, for example, the positions (decoding start time points and display start time points) of IDR pictures are matched with each other for encoding.

Meanwhile, as a derived form of the frame rate reduction method of (1), the following method is conceivable. Specifically, the choppiness of a low frame rate image obtained by dropping frames from a high frame rate video is stronger than that of a video taken at the low frame rate. This is a phenomenon that occurs due to a too short shutter speed (exposure time) with respect to an increased reproduction time for one frame.

In view of this, there has been a method including synthesizing adjacent frames instead of performing simple frame-dropping, to thereby convert frame rates while preventing a lack of information.

As illustrated in the upper part of FIG. 9, for example, when an original stream is at a shutter speed of 1/60 seconds and a frame rate of 60Hz (frame display time of 1/60 seconds), frames are simply dropped from 60p to generate 30p, and the frames are repeated to achieve 60p as illustrated in the middle part of FIG. 9. Through this conversion, as illustrated in the lower part of FIG. 9, the post-conversion stream displays a frame at a shutter speed of 1/60 seconds for 1/30 seconds (a display time twice as long as that of the original stream).

A creation flow in this case is as follows as illustrated in FIG. 10. As indicated by the arrow P1, a stream at 4K/60p is subjected to frame rate reduction so that streams at a plurality of low frame rates are generated. After that, as indicated by the arrow P2, as single frame rate conversion, previous frames are repeated in the generated streams at the plurality of low frame rates so that all the streams are converted to streams at a frame rate of 60p. Note that, in the example of FIG. 10, the hatched rectangles represent frames that are copies (repetitions) of previous frames. The same holds true in the figures referred to below.

<Metadata Related to Frame Rate Conversion>

With simple frame-dropping described above, video information in the display time of dropped frames is lost, resulting in a laggy video or a video that seems unnatural depending on the content of the video.

In view of this, a technique that creates a new sequence of frames by synthesizing adjacent frames instead of dropping frames is also conceivable. With this, a less laggy and smooth moving image at a reduced frame rate can be achieved. Meanwhile, when frames that are generated by synthesizing a plurality of frames are not seen as a moving image, and a single frame extracted from the frames is seen as a still image, the still image is seen as a quite blurry image in some cases. This is because such a frame corresponds to a video close to a still image taken at low shutter speed (long exposure time), as it were. It is difficult to use a quite blurry image as a thumbnail representing a moving image.

It is not easy for a reproduction terminal to grasp how a frame rate has been reduced in a sender. In view of this, when a frame rate is reduced in the sender, information representing the frame rate reduction method is applied to content so that the reproduction terminal can acquire the information. By obtaining the information, the reproduction terminal can select a better thumbnail creation method.

In a case where a reproduction terminal has a function of extracting a frame from a moving image to generate a still image thumbnail image representing whole content or a certain scene, for example, the reproduction terminal can acquire the frame rate reduction method as metadata from the server and make the following determination. That is, the reproduction terminal generates a thumbnail when the frame rate of a stream is reduced by a method that provides less blurry images, and takes, when the frame rate of the stream is reduced by a method that provides more blurry images, another method (for example, expressing the thumbnail image by text or generating the thumbnail image by computer graphics) without creating the thumbnail image by the method including extracting a frame from a moving image.

FIG. 11 is a diagram illustrating a frame rate conversion method including adjacent frame synthesis.

As illustrated in the upper part of FIG. 11, for example, when an original stream is at a shutter speed of 1/60 seconds and a frame rate of 60Hz (frame display time of 1/60 seconds), adjacent frames are synthesized with each other so that 30p is generated while choppiness is reduced as illustrated in the middle part of FIG. 11. With this, these frames achieve an appearance close to a video taken at a shutter speed of 1/30 seconds and 30p.

Then, the generated frames are repeated to achieve 60p. Through this conversion, as illustrated in the lower part of FIG. 11, the post-conversion stream displays a frame at a shutter speed of 1/30 seconds for 1/30 seconds (a display time twice as long as that of the original stream).

Note that, single frame rate conversion illustrated in the right part of FIG. 10 may not be performed, and content at various frame rates may be encoded to be sent. In such a case, as an encoding rule in encoding, irrespective of frame rates, frame grids are matched with each other and the display time points of sync samples are matched with each other. Examples of a frame grid rule for frame rate reduction may include performing an original frame rate × (1/positive even number) or an original frame rate × (positive even number/positive odd number).

With this, when switching streams, the reproduction terminal can be more likely to seamlessly connect to a switched-to stream.

From the above, in the present technology, the sender generates videos at a plurality of low frame rates from a certain input video, and converts the videos to videos at a single frame rate, to thereby perform compression encoding.

Note that, the single frame rate is not necessarily the same as the frame rate of the input image. The single frame rate may be higher than the frame rate of the input video so as to be matched with the frame rate of other content. Further, in compression encoding, it is necessary to devise a configuration in which decoding start points are matched with each other and Segment boundaries are matched with each other, for example.

Further, in the present technology, the sender applies, to content, information associated with the frame rate reduction method and frame rates as metadata. Specifically, the metadata is provided in a layer of an MPD or an MP4. Note that, the details of this are described later with reference to FIG. 27 and the subsequent figures.

The metadata is information regarding an original frame rate, a substantial (net) frame rate, and a frame rate conversion method (regular replication, regular frame-dropping, or synthesis, for example), and representing whether a video is extractable as a still image (available for a thumbnail).

In addition, in the present technology, the reproduction terminal selects a low frame rate stream depending on the bandwidth of a transmission path. Further, by referring to metadata that the reproduction terminal acquires from the server, the reproduction terminal determines a display frame rate and a thumbnail generation method therefor.

From the above, when streams at different frame rates are switched, the streams are easily switched because the streams are apparently at a single fixed frame rate.

Frame rates are increased in single frame rate conversion, but an increase in bit rate is prevented owing to devised encoding (slice data is omitted) because the same frames are repeated.

A still image and a moving image can be switched. Still images are generally created by an encoding method different from that for moving images. Still images are created in an image format with no time axis concept, and hence it is not easy for a player to seamlessly switch a still image and a moving image. With a "moving image in which still images are repeated," however, such switching can be performed as switching between moving images.

Created content is at a single frame rate, and hence metadata is necessary to distinguish the created content from other content, but the metadata including net frame rates is useful as parameters for selecting an optimum stream in switching.

Even when content is at a fixed frame rate of 60p and a display environment only supports a frame rate of 30p, for example, the content can be displayed when the net frame rate is 30p.

As compared to the case of achieving switching between streams at different frame rates, Segment boundaries and frames at which decoding can start can be more freely arranged.

With metadata, a real frame rate can be presented to the user.

Note that, considered in more general terms, in future video display, a real frame rate of content and a display frame rate are supposed to be not matched with each other depending on environment. Also as a measure for dealing with this difference, the following metadata may be needed.

In the example of FIG. 13, in order from the above, there are illustrated a stream at 4k/60p and 30 Mbps that is a stream at the highest image quality, a stream at 4k/60p and 15 Mbps that is a stream at a reduced bit rate, a stream at 4k/60p and 15 Mbps (substantial frame rate of 30p) that is a stream whose frame rate is converted to a substantial frame rate of 30p by frame-dropping and then converted to 60p, and a stream at 4k/60p and 15 Mbps (substantial frame rate of 20p) that is a stream whose frame rate is converted to a substantial frame rate of 20p by frame-dropping and then converted to 60p. Note that, in regard to the frames of FIG. 13, similar to the figures referred to so far, the rectangles represent frames, the solid black rectangles represent pictures (frames) at which decoding can start, and the hatched rectangles represent frames that are copies (repetitions) of previous frames. The term "substantial" means net, and a substantial frame rate is also referred to as "net frame rate."

Specifically, as illustrated in FIG. 13, even when low rate frames of 30p and 20p are generated from 4k/60p, the streams are all subjected to compression encoding as 4k/60p finally, and hence are not apparently distinguished from each other. Thus, it is necessary to add information regarding substantial (net) frame rates (30p and 20p in this example) as metadata.

<2. First Embodiment (Distribution System)>

<Distribution System>

Next, a system to which the above-mentioned present technology is applied is described. FIG. 14 is a block diagram illustrating a configuration example of a distribution system that is an aspect of an information processing system to which the present technology is applied. A distribution system 100 illustrated in FIG. 14 is a system configured to distribute data (content) such as images or sound. In the distribution system 100, a file generation device 101, a distribution server 102, and a reproduction terminal 103 are communicably connected to each other via a network 104.

The file generation device 101 is an aspect of an information processing device to which the present technology is applied, and is a device configured to perform processing related to generation of an MP4 file for storing image data and sound data, and the file of an MPD (also referred to as "MPD file"). For example, the file generation device 101 generates image data and sound data, and generates an MP4 file for storing the generated image data and the generated sound data, and an MPD file for managing the MP4 file. The file generation device 101 then supplies the generated files to the distribution server 102.

The distribution server 102 is an aspect of the information processing device to which the present technology is applied, and is a server configured to perform processing related to a content data distribution service using MPEG-DASH (specifically, an MP4 file distribution service using an MPD file). For example, the distribution server 102 acquires and manages the MPD file and the MP4 file supplied from the file generation device 101, to thereby provide the distribution service using MPEG-DASH. For example, the distribution server 102 provides an MPD file to the reproduction terminal 103 in response to a request from the reproduction terminal 103. Further, the distribution server 102 supplies, in response to a request based on the MPD file from the reproduction terminal 103, a requested MP4 file to the reproduction terminal 103.

The reproduction terminal 103 is an aspect of the information processing device to which the present technology is applied, and is a device configured to perform processing related to reproduction of image data and sound data. For example, the reproduction terminal 103 requests, in accordance with MPEG-DASH, the distribution server 102 to distribute an MP4 file, and acquires the MP4 file supplied in response to the request. More specifically, the reproduction terminal 103 acquires an MPD file from the distribution server 102, and acquires, on the basis of information in the MPD file, an MP4 file for storing desired content data from the distribution server 102. The reproduction terminal 103 decodes the acquired MP4 file to reproduce image data and sound data.

The network 104 is any communication network, and may be a communication network employing wired communication, a communication network employing wireless communication, or a combination thereof. Further, the network 104 may include one communication network or a plurality of communication networks. The network 104 may include a communication network or a channel in compliance with any communication standard. The network 104 may include, for example, a wireless communication network that performs communication in compliance with the standard of the Internet, the public switched telephone network, a wide area communication network for wireless moving bodies such as the so-called 3G network or 4G network, a WAN (Wide Area Network), a LAN (Local Area Network), or Bluetooth (registered trademark), or a wired communication network in compliance with the standard of the channel of short-range wireless communication such as NFC (Near Field Communication), an infrared communication channel, HDMI (registered trademark) (High-Definition Multimedia Interface), or USB (Universal Serial Bus).

The file generation device 101, the distribution server 102, and the reproduction terminal 103 are each communicably connected to the network 104, and can transmit/receive information to/from each other via the network 104. The file generation device 101, the distribution server 102, and the reproduction terminal 103 may be connected to the network 104 with wired communication, wireless communication, or a combination thereof.

Note that, in FIG. 14, as the configurations of the distribution system 100, one file generation device 101, one distribution server 102, and one reproduction terminal 103 are illustrated, but the numbers of these components are not particularly limited and may be different from each other. In the distribution system 100, for example, one or a plurality of file generation devices 101, one or a plurality of distribution servers 102, and one or a plurality of reproduction terminals 103 may be provided.

<File Generation Device>

FIG. 15 is a block diagram illustrating an example of the main configuration of the file generation device 101. As illustrated in FIG. 15, the file generation device 101 includes a video stream generation unit 110, an audio stream generation unit 111, a content file generation unit 112, an MPD generation unit 113, and a communication unit 114.

The video stream generation unit 110 and the audio stream generation unit 111 perform processing related to generation of a content data stream. Further, the video stream generation unit 110 generates video metadata related to a video, and the audio stream generation unit 111 generates audio metadata related to audio.

For example, the video stream generation unit 110 performs A/D conversion or frame rate conversion on an input video analog signal (also referred to as "image signal"), or encodes the video analog signal to generate a video stream that is a stream of video digital data (also referred to as "image data"), and supplies the video stream to the content file generation unit 112. Note that, the video stream generation unit 110 applies the present technology described above in frame rate conversion, to thereby perform frame rate reduction processing and single frame rate conversion processing.

For example, the audio stream generation unit 111 modulates or encodes an input audio analog signal (also referred to as "sound signal"), or performs A/D conversion on the audio analog signal to generate an audio stream that is a stream of audio digital data (also referred to as "sound data"), and supplies the audio stream to the content file generation unit 112.

Note that, the contents of this signal processing by the video stream generation unit 110 on video analog signals are not particularly limited. The contents of this signal processing by the audio stream generation unit 111 on audio analog signals are not particularly limited. In the case of employing modulation or encoding, for example, the modulation method or the encoding method is not particularly limited. The video stream generation unit 110 can generate, for example, an MPEG2 stream, an AVC stream, or an HEVC stream from a video analog signal. The audio stream generation unit 111 can generate, for example, a DSD lossless stream, an AAC stream, or an LPCM stream from an audio analog signal.

The content file generation unit 112 performs processing related to generation of a file (content file) for storing the content data that is supplied from the video stream generation unit 110 and the audio stream generation unit 111. The content file generation unit 112 generates, for example, an MP4 file that is a content file for storing the video stream that is supplied from the video stream generation unit 110 as content data and the audio stream that is supplied from the audio stream generation unit 111 as content data. The content file generation unit 112 then supplies the MP4 file to the MPD generation unit 113 and the communication unit 114.

Note that, the specifications of the content file that the content file generation unit 112 generates are not particularly limited. The content file generation unit 112 can generate an MP4 file for storing, for example, an MPEG2 stream, an AVC stream, an HEVC stream, a DSD lossless stream, an AAC stream, or an LPCM stream. As a matter of course, the content file generation unit 112 may generate a content file other than an MP4 file. Here, DSD stands for Direct Stream Digital and is one of high-quality audio encoding methods.

The MPD generation unit 113 performs processing related to generation of management information for the content file generated by the content file generation unit 112. For example, the MPD generation unit 113 arranges the video metadata generated by the video stream generation unit 110 and the audio metadata generated by the audio stream generation unit 111 to predetermined locations, to thereby generate an MPD file for the MP4 file that is supplied from the content file generation unit 112. The MPD generation unit 113 then supplies the MPD file to the communication unit 114.

The communication unit 114 performs processing related to communication with another device via the network 104. The communication unit 114 supplies the supplied MPD file or MP4 file to the distribution server 102, for example.

As illustrated in FIG. 15, the MPD generation unit 113 includes a video metadata acquisition unit 121, an audio metadata acquisition unit 122, and a file generation unit 123.

The video metadata acquisition unit 121 acquires the video metadata generated by the video stream generation unit 110. The audio metadata acquisition unit 122 acquires the audio metadata generated by the audio stream generation unit 111. The file generation unit 123 performs processing related to MPD file generation with the metadata acquired by the video metadata acquisition unit 121 and the audio metadata acquisition unit 122.

FIG. 16 is a block diagram illustrating a configuration example of the video stream generation unit 110.

In the example of FIG. 16, the video stream generation unit 110 includes an A/D conversion unit 131, a frame rate reduction processing unit 132, a single frame rate conversion processing unit 133, a compression encoding unit 134, and a video metadata generation unit 135.

The A/D conversion unit 131 performs A/D conversion on a video analog signal to generate a video stream. The generated video stream is supplied to the frame rate reduction processing unit 132.

The frame rate reduction processing unit 132 performs frame rate reduction to generate streams at a plurality of low frame rates from a high frame rate stream (for example, stream at 4K/60p).

The single frame rate conversion processing unit 133 performs the single frame rate conversion processing. Specifically, the single frame rate conversion processing unit 133 repeats previous frames in the streams at the plurality of low frame rates generated by the frame rate reduction processing unit 132, to thereby convert all the low frame rate streams to streams at a single frame rate of 60p, for example.

The compression encoding unit 134 performs encoding processing (encoding) on the streams subjected to single frame rate conversion with the positions (decoding start time points and display start time points) of IDR pictures being matched with each other in the case of H.264/AVC or H.265/HEVC, for example.

In the frame rate reduction processing and the single frame rate conversion processing, the video metadata generation unit 135 respectively performs the frame rate reduction processing and the single frame rate conversion processing, specifically, generates metadata related to a frame rate (conversion). The metadata represents, as described above, the original frame rate (fps) value, the frame rate conversion method (regular replication, regular frame-dropping, key-frame-detection adaptation frame-dropping, or shutter speed conversion frame synthesis), and whether a frame is extractable as a still image (a frame corresponds to an image that is less blurry and available for a thumbnail), for example.

FIG. 17 is a diagram illustrating examples of syntax and semantics of the field as the structure of metadata. Note that, this is frame rate conversion metadata that is one metadata of video metadata, and is thus hereinafter referred to as "video metadata" or "frame rate conversion metadata."

As the syntax of the metadata, the following are described from the above.

frame_rate_conversion_parameters: a parameter related to frame rate conversion
orignal_fps_numerator: a numerator representing a pre-conversion frame rate orignal_fps
orignal_fps_denominator: a denominator representing a pre-conversion frame rate orignal_fps
net_fps_numerator: a numerator representing a post-conversion net frame rate net_fps
net_fps_denominator: a denominator representing a post-conversion net frame rate net_fps
conversion_type: a conversion method for reducing a frame rate
thumbnail_available: a flag indicating whether data is available for a still image thumbnail
reserved: a reserved area

As the semantics of the field, the following is described. • Pre-conversion frame rate

$$original\_fps = original\_fps\_numerator/original\_fps\_denominator$$

*A frame rate after single frame rate conversion is not always the same as this pre-conversion frame rate, and hence the pre-conversion frame rate is grasped from this field. An apparent frame rate can be grasped from a sample_duration in a system layer of an ISOBMFF (ISO/IEC 14496-12) or an @frameRate of an MPD.

• net frame rate

$$net\_fps = net\_fps\_numerator/net\_fps\_denominator$$

• coversion_type

0: No information, unknown
1: Simple frame-dropping at regular intervals
2: Adjacent frame synthesis
3: Frame repetition
4-255: reserved (user defined conversion)

As the user defined conversion, a frame-dropping method, for example, alternately performing 2-frame dropping and 3-frame dropping is described.

• thumbnail_available

This value is a flag representing whether a frame extracted from this content is displayable as a still image thumbnail or is a greatly blurry image that cannot be used for the thumbnail. This value represents intention of the sender.

0: No information, unknown
1: Available for a thumbnail
2: Inappropriate for a thumbnail

Note that, the storage location of the metadata is described later with reference to FIG. 27 to FIG. 32. However, in a case where the metadata is stored in a predetermined location of an MPD file, for example, the MPD generation unit 113 arranges the metadata to the predetermined location. Meanwhile, in a case where the metadata is stored in a predetermined location of an MP4 file, for example, the content file generation unit 112 arranges the metadata to the predetermined location.

<Flow of Distribution Data Generation Processing>

Next, an example of the flow of distribution data generation processing that is executed by the file generation device 101 of the distribution system 100 is described with reference to the flowchart of FIG. 18. The file generation device 101 performs this distribution data generation processing when generating an MP4 file or an MPD file of content data.

When the distribution data generation processing starts, in Step S101, the video stream generation unit 110 of the file generation device 101 generates a video stream from a video analog signal. Further, at this time, the video stream generation unit 110 also generates video metadata related to the video. The details of this video stream generation processing are described later with reference to FIG. 19.

In Step S102, the audio stream generation unit 111 generates a plurality of kinds of audio streams from an audio analog signal. Further, at this time, the audio stream generation unit 111 also generates audio metadata related to the audio.

In Step S103, the content file generation unit 112 generates a content file (for example, MP4 file) for storing the video stream generated in Step S101 and the audio streams generated in Step S102.

In Step S104, the MPD generation unit 113 executes MPD file generation processing to generate an MPD file for managing the content file (MP4 file) generated in Step S103. The details of this MPD file generation processing are described later with reference to FIG. 22.

In Step S105, the communication unit 114 supplies (uploads) the content file generated in Step S103 and the MPD file generated in Step S104 to the distribution server 102.

With the end of the processing in Step S105, the distribution data generation processing ends.

<Flow of Video Stream Generation Processing>

Next, with reference to the flowchart of FIG. 19, an example of the flow of the video stream generation processing that is executed in Step S101 of FIG. 18 is described.

In Step S121, the A/D conversion unit 131 performs A/D conversion on a video analog signal to generate a video stream (also referred to as "video signal"). The generated video stream is supplied to the frame rate reduction processing unit 132.

In Step S122, the frame rate reduction processing unit 132 performs the frame rate reduction processing on the video stream obtained through A/D conversion in Step S121. The details of this frame rate reduction processing are described later with reference to FIG. 20. In Step S122, frame rate reduction is performed so that streams at a plurality of low frame rates are generated from a high frame rate stream (for example, stream at 4K/60p).

In Step S123, the single frame rate conversion processing unit 133 performs the single frame rate conversion processing on the streams obtained through frame rate reduction in Step S122. The details of this single frame rate conversion processing are described later with reference to FIG. 21. In Step S123, previous frames are repeated in the streams at the plurality of low frame rates so that all the low frame rate streams are converted to streams at a frame rate of 60p.

In Step S124, the compression encoding unit 134 performs the encoding processing on the streams subjected to single frame rate conversion with the positions (decoding start time points and display start time points) of IDR pictures being matched with each other in the case of H.264/AVC or H.265/HEVC, for example.

<Flow of Frame Rate Reduction Processing>

Next, with reference to the flowchart of FIG. 20, an example of the flow of the frame rate reduction processing that is executed in Step S122 of FIG. 19 is described.

In Step S141, the frame rate reduction processing unit 132 sets a conversion target frame rate value. At this time, the video metadata generation unit 135 sets the conversion target frame rate value to the metadata net_fps.

In Step S142, the frame rate reduction processing unit 132 inputs the video signal from the A/D conversion unit 131.

In Step S143, the frame rate reduction processing unit 132 acquires the frame rate value of the input video signal. At this time, the video metadata generation unit 135 sets the acquired value (frame rate value) to the metadata original_fps.

In Step S144, the frame rate reduction processing unit 132 determines whether or not the frame rate conversion method is simple frame-dropping. In a case where it is determined that the frame rate conversion method is simple frame-dropping in Step S144, the processing proceeds to Step S145. In Step S145, the frame rate reduction processing unit 132 makes a frame dropping rule from the frame rate value of the input video and the conversion target frame rate value, and drops frames in accordance with the rule. After that, the processing proceeds to Step S149.

In a case where it is determined that the frame rate conversion method is not simple frame-dropping in Step S144, the processing proceeds to Step S146. In Step S146, the frame rate reduction processing unit 132 determines whether or not the frame rate conversion method is adjacent frame synthesis. In a case where it is determined that the frame rate conversion method is not adjacent frame synthesis in Step S146, the processing proceeds to Step S147. In Step S147, the frame rate reduction processing unit 132 makes a frame synthesis rule from the frame rate value of the input video and the conversion target frame rate value, and synthesizes the adjacent frames to generate new frames. After that, the processing proceeds to Step S149.

In a case where it is determined that the frame rate conversion method is not adjacent frame synthesis in Step S146, the processing proceeds to Step S148. In Step S148, the frame rate reduction processing unit 132 reduces the frame rate by another method. After that, the processing proceeds to Step S149.

In Step S149, the video metadata generation unit 135 stores the frame rate conversion method to the metadata conversion_type, and determines a value of the metadata thumbnail_available from the frame rate conversion method, to thereby set the video metadata. After that, the frame rate reduction processing ends, and the processing returns to the video stream generation processing of FIG. 19.

<Flow of Single Frame Rate Conversion Processing>

Next, with reference to the flowchart of FIG. 21, an example of the flow of the single frame rate conversion processing that is executed in Step S123 of FIG. 19 is described.

In Step S161, the single frame rate conversion processing unit 133 sets a conversion target frame rate value.

In Step S162, the single frame rate conversion processing unit 133 inputs the video signal whose frame rate is reduced by the frame rate reduction processing unit 132. In Step S163, the single frame rate conversion processing unit 133 acquires the frame rate value of the input video signal. In Step S164, the single frame rate conversion processing unit 133 makes a frame rate conversion rule from the frame rate value of the input video and the conversion target frame rate value, and converts the sequence of frames.

In Step S165, the video metadata generation unit 135 stores the metadata frame_rate_conversion_parameters in a given location. After that, the single frame rate conversion processing ends, and the processing returns to the video stream generation processing of FIG. 19.

<Flow of MPD File Generation Processing>

Next, with reference to the flowchart of FIG. 22, the MPD file generation processing that is executed in Step S104 of FIG. 18 is described.

In Step S181, the video metadata acquisition unit 121 acquires the video metadata generated in video stream generation in Step S101 (in particular, the metadata of the present technology is hereinafter also referred to as "frame rate conversion metadata") from the video stream generation unit 110.

In Step S182, the audio metadata acquisition unit 122 acquires the audio metadata generated in audio stream generation in Step S102 from the audio stream generation unit 111.

In Step S183, the file generation unit 123 generates an MPD file including the video metadata acquired in Step S181 and the audio metadata acquired in Step S182.

After that, the MPD file generation processing ends, and the processing returns to the distribution data generation processing of FIG. 18.

Next, with reference to FIG. 23, operation of the reproduction terminal 103, which is the client, is described.

In the example of FIG. 23, on the distribution server 102, a plurality of streams at 4K/60p are prepared. The plurality of streams at 4K/60p are four kinds of streams including a stream with id = 1 at 4K/60p and 30 Mbps, a stream with id = 2 at 4K/60p and 15 Mbps, a stream with id = 3 at 4K/60p and 15 Mbps (simple frame-dropping, net 30p), and a stream with id = 4 at 4K/60p and 15 Mbps (simple frame-dropping, net 20p).

It is assumed that the reproduction terminal 103 acquires the stream with id = 1 at 4K/60p and 30 Mbps when the transmission band is sufficiently wide, but can only display 4K up to 30p due to its display performance. Here, the stream with id = 1 is dropped for display.

Here, it is assumed that the transmission bandwidth is narrowed and only a stream at 15 Mbps or lower can be transmitted. The reproduction terminal 103 refers to metadata related to frame rate conversion acquired from the distribution server 102, and selects a stream at the highest image quality from displayable streams. If the stream with id = 2 that cannot be displayed at 60p is acquired, it is necessary to drop frames to achieve 30p on the client side. This means that information is discharged, which is no use. Meanwhile, the stream with id = 3 has a net fps of 30p, and hence no information is substantially discharged even when the stream is converted to 30p after decoding. When the stream with id = 2 and the stream with id = 3 are compared to each other, the number of net frames of the stream with id = 3 is one-half of that of the stream with id = 2. Thus, it is conceivable that, even at the same speed of 15 Mbps, in the stream with id = 3, a compression ratio is lower and the image quality of each frame is thus higher than those of the stream with id = 2. As a consequence, it is found that the stream with id = 3 is optimally selected in the reproduction terminal 103.

<Reproduction Terminal>

FIG. 24 is a block diagram illustrating an example of the main configuration of the reproduction terminal 103. As illustrated in FIG. 24, the reproduction terminal 103 includes an MPD acquisition unit 151, a parsing unit 152, a content file acquisition unit 153, a stream extraction unit 154, a video decoding unit 155, a video output unit 156, an audio decoding unit 157, an audio output unit 158, a control unit 159, and an operation unit 160.

The MPD acquisition unit 151 performs processing related to MPD file acquisition. For example, the MPD acquisition unit 151 requests an MPD file from the distribution server 102, and acquires the MPD file supplied from the distribution server 102. The MPD acquisition unit 151 supplies the acquired MPD file to the parsing unit 152.

The parsing unit 152 performs processing related to MPD file parsing. For example, the parsing unit 152 parses the MPD file that is supplied from the MPD acquisition unit 151 to generate control information based on the description of the MPD file, and supplies the control information to the content file acquisition unit 153.

The content file acquisition unit 153 performs processing related to content file acquisition. For example, the content file acquisition unit 153 acquires, on the basis of the control information that is supplied from the parsing unit 152, an MP4 file from the distribution server 102 as a content file, and supplies the acquired MP4 file to the stream extraction unit 154.

The stream extraction unit 154 performs processing related to stream extraction. For example, the stream extraction unit 154 extracts a video stream or an audio stream from the MP4 file that is supplied from the content file acquisition unit 153. In a case where the video stream is decoded to be output, for example, the stream extraction unit 154 supplies the extracted video stream to the video decoding unit 155. In a case where the video stream is output as it is, the stream extraction unit 154 supplies the extracted video stream to the video output unit 156. In a case where the audio stream is decoded to be output, for example, the stream extraction unit 154 supplies the extracted audio stream to the audio decoding unit 157. In a case where the audio stream is output as it is, the stream extraction unit 154 supplies the extracted audio stream to the audio output unit 158.

The video decoding unit 155 performs processing related to decoding of encoded data that is encoded content data. For example, the video decoding unit 155 decodes the video stream supplied from the stream extraction unit 154, for example, to thereby restore a video analog signal. The video decoding unit 155 supplies the restored video analog signal to the video output unit 156. Note that, the video decoding unit 155 performs any processing on video streams as long as the processing is a proper method for each stream. In addition to decoding, demodulation or D/A conversion may be performed, for example. Further, the video decoding unit 155 generates, depending on control by a switching control unit 181, a thumbnail image representing content from a stream or text or CG (Computer Graphics), and overlaps the thumbnail image on the stream as needed, for example, to thereby output the resultant to the video output unit 156.

The audio decoding unit 157 performs processing related to decoding of encoded data that is encoded content data. For example, the audio decoding unit 157 decodes the audio stream supplied from the stream extraction unit 154, for example, to thereby restore an audio analog signal. The audio decoding unit 157 supplies the restored audio analog signal to the audio output unit 158. Note that, the audio decoding unit 157 performs any processing on audio streams as long as the processing is a proper method for each stream. In addition to decoding, demodulation or D/A conversion may be performed, for example.

The audio stream is a DSD lossless stream, for example, and the audio decoding unit 157 decodes the DSD lossless stream to restore DSD data, and demodulates the resultant to restore an audio analog signal. Further, for example, the audio stream may be an LPCM stream or an AAC stream. The audio decoding unit 157 performs processing depending on these pieces of data, to thereby restore audio analog signals.

The video output unit 156 performs processing related to output of content data. For example, the video output unit 156 includes a display, and outputs, from the display, the video analog signal that is supplied from the video decoding unit 155. Further, for example, the video output unit 156 includes a video signal output terminal, and supplies the video analog signal that is supplied from the video decoding unit 155 to another device through the output terminal. In addition, for example, the video output unit 156 includes a digital signal output terminal, and supplies the video stream supplied from the stream extraction unit 154 to another device, such as an external video decoder 161, through the output terminal. That is, the video stream can also be decoded by the external video decoder 161 provided externally to the reproduction terminal 103.

The audio output unit 158 performs processing related to output of content data. For example, the audio output unit 158 includes a speaker, and outputs, from the speaker, the audio analog signal that is supplied from the audio decoding unit 157. Further, for example, the audio output unit 158 includes an analog signal output terminal, and supplies the audio analog signal that is supplied from the audio decoding unit 157 to another device through the output terminal. In addition, for example, the audio output unit 158 includes a digital signal output terminal, and supplies the audio stream supplied from the stream extraction unit 154 to another device, such as an external audio decoder 162, through the output terminal. That is, the audio stream can also be decoded by the external audio decoder 162 provided externally to the reproduction terminal 103.

Further, as illustrate in FIG. 24, the content file acquisition unit 153 includes the switching control unit 181. The switching control unit 181 performs processing related to control of switching of content data to be reproduced. For example, the switching control unit 181 controls switching on the basis of the transmission bandwidth and the control information (frame conversion metadata) from the parsing unit 152.

The control unit 159 includes a built-in memory 159A configured to store information necessary for the reproduction terminal 103 to operate. The control unit 159 holds settings that are made by the user using the operation unit 160 in the memory 159A. The control unit 159 supplies the setting information held in the memory 159A in response to the switching control unit 181.

The operation unit 160 includes, for example, a mouse, a keyboard, or a touch panel. The operation unit 160 inputs the settings of parameters that are input by the user.

<Flow of Content Acquisition Processing>

Next, an example of the flow of content acquisition processing that is executed by the reproduction terminal 103 is described with reference to the flowchart of FIG. 25.

The MPD acquisition unit 151 of the reproduction terminal 103 acquires, for example, an MPD file specified by, for example, the user from the distribution server 102. The parsing unit 152 executes the parsing processing to parse the acquired MPD file, to thereby generate control information to which the parsing result is reflected. The control information includes frame rate conversion metadata.

In Step S201, the switch control unit 181 acquires the frame rate conversion metadata. In Step S202, the switch control unit 181 determines, on the basis of the description of the frame rate conversion metadata, whether or not there is a stream (Representation) transmittable with a current transmission bandwidth. In a case where it is determined that there is no stream transmittable with the current transmission bandwidth in Step S202, the processing proceeds to Step S203.

In Step S203, the switch control unit 181 performs processing dependent on implementation of the reproduction terminal 103 (player) because no stream can be a switching destination. After that, the processing proceeds to Step S207.

In a case where it is determined that there is a stream transmittable with the current transmission bandwidth in Step S202, Step S203 is skipped, and the processing proceeds to Step S204.

In Step S204, the switch control unit 181 determines whether or not the number of Representations at the highest bit rate is one. In a case where it is determined that the number of Representations at the highest bit rate is not one in Step S204, the processing proceeds to Step S205. In Step S205, the switch control unit 181 selects a stream at the highest net frame rate from streams at net frame rates equal to or lower than the display frame rate of the reproduction terminal 103, which is the client. In response to this, the content file acquisition unit 153 acquires an MP4 file of the stream selected by the switch control unit 181, and after that, the processing proceeds to Step S207.

In a case where it is determined that the number of Representations at the highest bit rate is one in Step S204, the processing proceeds to Step S206. In Step S206, the switch control unit 181 selects a stream at the highest bit rate. In response to this, the content file acquisition unit 153 acquires an MP4 file of the stream selected by the switch control unit 181, and after that, the processing proceeds to Step S207.

In Step S207, the content file acquisition unit 153 determines whether or not to end the content file acquisition processing. In a case where it is determined not to end the content file acquisition processing in Step S207, the processing returns to Step S202, and Step S202 and the subsequent processing are repeated. In a case where the user operates the operation unit 160 to stop content file acquisition, for example, the signal is input through the control unit 159, with the result that it is determined to end the content file acquisition processing in Step S207, and the content acquisition processing ends.

Note that, the content file acquisition processing described above is an example, and is not particularly limited. Specifically, any algorithm can be employed as long as the algorithm achieves the processing of selecting an optimum stream with the use of frame rate conversion metadata acquired from the distribution server 102.

<Flow of Thumbnail Image Generation Processing>

Next, an example of the flow of thumbnail image generation processing that is executed by the reproduction terminal 103 is described with reference to the flowchart of FIG. 26.

In Step S221, the switching control unit 181 further determines whether or not the value of the thumbnail_available of frame rate conversion metadata is 1. In a case where it is determined that the value of the thumbnail_available of the frame rate conversion metadata is 1 in Step S221, the processing proceeds to Step S222. In Step S222, the video decoding unit 155 extracts one frame from a stream in response to a command from the switching control unit 181 to set the frame as a thumbnail image representing content, and ends the thumbnail image generation processing.

In a case where it is determined that the value of the thumbnail_available of the frame rate conversion metadata is not 1 in Step S221, the processing proceeds to Step S223. In Step S223, the video decoding unit 155 generates a thumbnail image representing content with text (characters) or CG (Computer Graphics) in response to a command from the switching control unit 181 without extracting a frame from a stream, and ends the thumbnail image generation processing.

<Metadata Storage Location>

Next, there is described a storage location of the above-mentioned frame rate conversion metadata (frame_rate_conversion_parameters) that is metadata to which the present technology is applied.

As the storage location of the frame rate conversion metadata (frame_rate_conversion_parameters), a method for storing the frame rate conversion metadata in an MPD file and a method for storing the frame rate conversion metadata in an MP4 file are given.

First, the case where the metadata is stored in an MPD file is described. In the case where the metadata is stored in the MPD file, the simplest and easy-to-understand method is to define the metadata as an EssentialPropterty or a SupplementalProperty, and apply one Property to a Representation. Note that, the present technology is not limited to the method described above, and Properties may be described in the respective Representations or put together in an AdaptationSet or in a Period.

FIG. 27 is a diagram illustrating an example of the case where the metadata is stored in an MPD.

<Example of Case where Metadata Is Stored in MPD>

First, the metadata is defined as an extended Property (EssentialPropterty/SupplementalProperty). A schemeIdUri is given a name representing a frame_rate_conversion_parameters () and fields are enumerated in a value as illustrated in FIG. 27.

    schemeIdUri = "urn:mpeg:dash:frame_rate_conversion_parameters:2016"
    value = "(AdaptationSet_id), (Representation_id), original_fps, net_fps, conversion_type, thumbnail_available"

Note that, the character string in the schemeIdUri is an example and has no particular meaning.

The semantics of the field is the same as that of the frame_rate_conversion_parameters (). Now, the semantics of the field is described.

(AdaptationSet_id): this value is used in the case where the extended Properties are enumerated together in the Period, and specifies the AdaptationSet. This value is omitted in the case where the extended Properties are described in the AdaptationSet or the Representations.

(Representation_id): this value is used in the case where the extended Properties are enumerated together in the Period or the AdaptationSet, and specifies the Representation. This value is omitted in the case where the extended Properties are described in the Representations.

original_fps: pre-conversion frame rate (a decimal point can be used in an MPD and hence a value is directly described without being converted to a fraction)

net_fps: post-conversion net frame rate (a decimal point can be used in an MPD and hence a value is directly described without being converted to a fraction)

conversion_type: conversion method for reducing a frame rate

thumbnail_available: this value is a flag representing whether a frame extracted from this content is displayable as a still image thumbnail or is a greatly blurry image that cannot be used for the thumbnail.

<Example of Case where Metadata Is Applied to Representation>

FIG. 28 illustrates a description example of an MPD in the case where the metadata is applied to a Representation. In the case where the metadata is applied to the Representation, the metadata is described in a space sandwiched by <Representation> and </Representation>. Note that, in the example of FIG. 28, elements and attributes irrelated to the present technology are omitted. FIG. 28 is a description example of an AdaptationSet including three kinds of Representations at 4K/60p and net frame rates of 60p, 30p, and 15p.

<MPD>

<Period>

<AdaptationSet>

```
  <Representation id="1" bandwidth="30000000" frameRate="60"
  width="3840" height="2160">
    <EssentialProperty schemeIdUri =
    "urn:mpeg:dash:frame_rate_conversion_parameters:2016" value="60,
    60,1,1" />
  <BaseURL>100.mp4</BaseURL> </Representation>
 <Representation id="2" bandwidth="15000000" frameRate="60" width="3840"
 height="2160">
    <EssentialProperty schemeIdUri =
    "urn:mpeg:dash:frame_rate_conversion_parameters:2016" value="60,
    30,1,1" />
  <BaseURL>101.mp4</BaseURL> </Representation>
 <Representation id="3" bandwidth="15000000" frameRate="60" width="3840"
 height="2160">
    <EssentialProperty schemeIdUri =
    "urn:mpeg:dash:frame_rate_conversion_parameters:2016" value="60,
    15,1,1" />
  <BaseURL>102.mp4</BaseURL> </Representation>
  </AdaptationSet>
  </Period>
  </MPD>
```

Note that, in FIG. 28, also in a case where a SupplementalProperty is used, similar description is possible only with replacement of the EssensialPrperty by the SupplementalProperty.

<Example of Case where Metadata Is Applied to AdaptationSet>

FIG. 29 is a description example of an MPD in the case where the metadata is applied to an AdaptationSet. In the case where the metadata is applied to the AdaptationSet, Representations belonging to the AdaptationSet are specified by the Representation_id, and the same number of values as the Representations are enumerated. Note that, also in the example of FIG. 29, elements and attributes irrelated to the present technology are omitted. FIG. 29 is a description example of the AdaptationSet including three kinds of Representations at 4K/60p and net frame rates of 60p, 30p, and 15p.

<MPD>

<Period>

```
 <AdaptationSet>
 <EssentialProperty schemeIdUri =
 "urn:mpeg:dash:frame_rate_conversion_parameters:2016" value="1, 60,
 60,1,1" />
```

```
<EssentialProperty schemeIdUri =
"urn:mpeg:dash:frame_rate_conversion_parameters:2016" value="2, 60,
30,1,1" />
<EssentialProperty schemeIdUri =
"urn:mpeg:dash:frame_rate_conversion_parameters:2016" value="3, 60,
15,1,1" />
 <Representation id="1" bandwidth="30000000" frameRate="60"
 width="3840" height="2160">
 <BaseURL>100.mp4</BaseURL> </Representation>
<Representation id="2" bandwidth="15000000" frameRate="60" width="3840"
height="2160">
 <BaseURL>101.mp4</BaseURL> </Representation>
<Representation id="3" bandwidth="15000000" frameRate="60" width="3840"
height="2160">
 <BaseURL>102.mp4</BaseURL> </Representation>
</AdaptationSet>
</Period>
</MPD>
```

Note that, in FIG. 29, also in the case where a SupplementalProperty is used, similar description is possible only with replacement of the EssensialPrperty by the SupplementalProperty.

<Example of Case where Metadata Is Applied to Period>

FIG. 30 is a description example of an MPD in the case where the metadata is applied to a Period. In the case where the metadata is applied to the Period, Representations are specified by the AdaptationSet_id and the Representation_id, and the same number of values as the Representations are enumerated. Note that, also in the example of FIG. 30, elements and attributes irrelated to the present technology are omitted. FIG. 30 is a description example of an AdaptationSet including three kinds of Representations at 4K/60p and net frame rates of 60p, 30p, and 15p.

<MPD>

<Period>

```
<EssentialProperty schemeIdUri =
"urn:mpeg:dash:frame_rate_conversion_parameters:2016" value="1,1, 60,
60,1,1" />
<EssentialProperty schemeIdUri =
"urn:mpeg:dash:frame_rate_conversion_parameters:2016" value="1,2, 60,
30,1,1" />
<EssentialProperty schemeIdUri =
"urn:mpeg:dash:frame_rate_conversion_parameters:2016" value="1,3, 60,
15,1,1" />
<AdaptationSet id="1">
<Representation id="1" bandwidth="30000000" frameRate="60" width="3840"
height="2160">
 <BaseURL>100.mp4</BaseURL> </Representation>
<Representation id="2" bandwidth="15000000" frameRate="60" width="3840"
height="2160">
 <BaseURL>101.mp4</BaseURL> </Representation>
<Representation id="3" bandwidth="15000000" frameRate="60" width="3840"
height="2160">
 <BaseURL>102.mp4</BaseURL> </Representation>
</AdaptationSet>
</Period>
</MPD>
```

Note that, in FIG. 30, also in the case where a SupplementalProperty is used, similar description is possible only with replacement of the EssensialPrperty by the SupplementalProperty.

Next, a case where the metadata is stored in an MP4 file is described. As methods to be used in the case where the metadata is stored in an MP4 file, there are given a method including describing the metadata in a system layer (moov) of the MP4, and a method including describing the metadata as timed metadata (metadatatrack) for a video track.

<Example of Case where Metadata Is Described in System Layer (moov) of MP4>

FIG. 31 is an example of the case where the metadata is described in a system layer (moov) of an MP4. A new Box is defined under a User data box ('udta') under a video track box ('trak'), and the frame_rate_conversion_parameters() is stored therein. The metadata serves as static metadata for a video track.
Box Type: 'frcp'
Container: User data box ('udta')
Mandatory: No
Quantity: Zero or more

```
aligned(8) class FrameRateConversionParametersBox extends FullBox
('frcp', version = 0, 0) {
int16 original_fps_numerator
int16 original_fps_denominator
int16 net_fps_numerator
int16 net_fps_denominator
int8 conversion_type
int8 thumbnail_available
int reserved
}
```

Note that, the semantics of each field is the same as that of the frame_rate_conversion_parameters().

<Example of Case where Metadata Is Described in Video Track of MP4>

FIG. 32 is an example of the case where the metadata is described as timed metadata track (metadata track) for a video track.
In a case where the frame_rate_conversion_parameters() is changed depending on the reproduction time point of a video, it is difficult to describe the metadata in the Box of a moov. In view of this, a new metadata track representing the frame_rate_conversion_parameters() is defined with the use of a track having a structure with a time axis. A method for defining a metadata track in ISO/IEC 14496-12 (ISOBMFF) is described below, and the metadata track may be defined in accordance with the following.
ISO/IEC 14496-12 Timed Metadata track 'meta,' C.11 Guidelines on the use of sample groups, timed metadata tracks, and sample auxiliary information
A time range in which the metadata is not changed is defined as one sample that corresponds to one frame_rate_conversion_parameters(). As illustrated in FIG. 32, a period of time in which one frame_rate_conversion_parameters() is effective can be represented by a sample_duration.
As described above, in the present technology, streams at a plurality of different frame rates are generated, and then the streams at the different frame rates are subjected to single frame rate conversion.
With this, in stream switching (switching), the streams are apparently at a single fixed frame rate, which facilitates stream switching. This means that streams at different frame rates can be seamlessly reproduced.
Further, according to the present technology, in stream switching (switching), switching between a still image and a moving image can be performed. Further, owing to devised encoding (slice data is omitted), an increase in bit rate can be reduced.
According to the present technology, in stream switching, an optimum stream can be selected by referring to metadata. Further, with the metadata, in regard to a certain bit rate, a case where the bit rate is only reduced, a case where resolution is lowered, and a case where a fps is reduced to lower the bit rate can be distinguished from each other. The metadata can be utilized for UI (User Interface) display. A real fps can be presented to the user.

<3. Second Embodiment (Computer)>

<Computer>

The series of processing processes described above can be executed by hardware or software. In a case where the series of processing processes is executed by software, programs of the software are installed on a computer. Here, examples of the computer include a computer incorporated in dedicated hardware and a general-purpose personal computer capable of executing various functions with various programs installed thereon, for example.

FIG. 33 is a block diagram illustrating a configuration example of computer hardware configured to execute, with a program, the series of processing processes described above.

In a computer 1000 illustrated in FIG. 33, a CPU (Central Processing Unit) 1001, a ROM (Read Only Memory) 1002, and a RAM (Random Access Memory) 1003 are connected to each other through a bus 1004.

To the bus 1004, an input-output interface 1010 is also connected. To the input-output interface 1010, an input unit 1011, an output unit 1012, a storage unit 1013, a communication unit 1014, and a drive 1015 are connected.

The input unit 1011 includes, for example, a keyboard, a mouse, a microphone, a touch panel, or an input terminal. The output unit 1012 includes, for example, a display, a speaker, or an output terminal. The storage unit 1013 includes, for example, a hard disk, a RAM disk, or a non-volatile memory. The communication unit 1014 includes a network interface, for example. The drive 1015 drives a removable medium 1021 such as a magnetic disk, an optical disc, a magneto-optical disc, or a semiconductor memory.

In the computer configured as described above, the series of processing processes described above is performed by the CPU 1001 loading a program stored in the storage unit 1013 on the RAM 1003 through the input-output interface 1010 and the bus 1004 to execute the program, for example. In the RAM 1003, for example, data necessary for the CPU 1001 to execute various processing processes is also stored as appropriate.

The program that the computer (CPU 1001) executes can be recorded on the removable medium 1021 such as package media to be applied, for example. In such a case, the program can be installed on the storage unit 1013 through the input-output interface 1010 with the removable medium 1021 being mounted on the drive 1015.

Further, this program can be provided through a wired or wireless transmission medium such as a local area network, the Internet, or digital satellite broadcasting. In such a case, the program can be received by the communication unit 1014 to be installed on the storage unit 1013.

Besides, this program can be installed on the ROM 1002 or the storage unit 1013 in advance.

<Others>

Note that, the various pieces of information associated with encoded data (bit stream) may be multiplexed on the encoded data to be transmitted or recorded. Alternatively, the information may be transmitted or recorded as individual data associated with the encoded data without being multiplexed on the encoded data. Here, the term "associate" means that, in processing of one data, another data may be used (may be linked), for example. That is, pieces of data associated with each other may be regarded as one data or pieces of individual data. For example, information associated with encoded data (image) may be transmitted on a transmission path different from that for the encoded data (image). Further, for example, information associated with encoded data (image) may be recorded on a recording medium different from that for the encoded data (image) (or a different recording area in the same recording medium). Note that, not all pieces of data but part of data may be "associated." For example, an image and information corresponding to the image may be associated with each other in any unit such as a plurality of frames, one frame, or a part of a frame.

Further, as described above, the terms used herein such as "synthesize," "multiplex," "add," "integrate," "include," "store," "put in," "stick in," and "insert" mean putting a plurality of objects in one such as putting encoded data and metadata in one data, and mean one form of the term "associate" described above.

Further, embodiments of the present technology are not limited to the embodiments described above, and various modifications can be made within the scope of the gist of the present technology.

For example, the system used herein means a collection of a plurality of components (devices or modules (parts), for example), and all the components are not necessarily included in one casing. This means that a plurality of devices housed in different casings and connected to each other via a network, and one device including a plurality of modules housed in one casing are each the system.

Further, for example, the configuration described as one device (or processing unit) may be divided into a plurality of devices (or processing units). In contrast, the configurations described above as the plurality of devices (or processing units) may be put in one device (or processing unit). Further, a configuration other than the ones described above may be added to the configuration of each device (or each processing unit) as a matter of course. In addition, as long as the configuration and operation of the entire system is substantially the same, the configuration of a certain device (or processing unit) may be partly included in the configuration of another device (or another processing unit).

Further, for example, the present technology can take the configuration of cloud computing in which a plurality of devices process one function in a shared and cooperated manner via a network.

Further, for example, the program described above can be executed by any device. In such a case, it is sufficient that the device has necessary functions (functional blocks, for example) and can thus acquire necessary information.

Further, for example, each step described with reference to the above-mentioned flowcharts can be executed by one device or a plurality of devices in a shared manner. In addition, in a case where a plurality of processing processes are included in one step, the plurality of processing processes included in this step can be executed by one device or a plurality of devices in a shared manner.

Note that, with regard to the program that the computer executes, the processing processes of the steps describing the program may be executed in chronological order in the order described herein, or in parallel. Alternatively, the processing processes may be individually executed at a right timing, for example, when an invocation is issued. In addition, the processing in the steps describing the program may be executed in parallel to the processing of another program, or may be combined with the processing of another program to be executed.

Note that, the plurality of present technologies described herein can be implemented independently of each other as long as no contradiction arises. As a matter of course, the plurality of present technologies can be implemented in any combination. For example, the present technology described in any of the embodiments can be implemented in combination with the present technology described in another embodiment. Further, any of the present technologies described above can be implemented in combination with another technology not described above.

Note that, the present technology can also employ the following configurations.

(1) An information processing device including:

a low frame rate generation unit configured to generate images at a plurality of different low frame rates from an input image;
a single frame rate conversion unit configured to convert the images at the plurality of different low frame rates, the images being generated by the low frame rate generation unit, to images at a single frame rate; and
an encoding unit configured to encode the images at the single frame rate obtained through conversion by the single frame rate conversion unit.

(2) The information processing device according to Item (1), further including:
an arrangement unit configured to arrange information associated with a frame rate as metadata for the images encoded.
(3) The information processing device according to Item (2), in which the metadata includes a net frame rate representing the plurality of different low frame rates generated by the low frame rate generation unit.
(4) The information processing device according to Item (2) or (3), in which the metadata includes a method for generating the low frame rates by the low frame rate generation unit.
(5) The information processing device according to any one of Items (2) to (4), in which the metadata includes an original frame rate before the images at the low frame rates are generated by the low frame rate generation unit.
(6) The information processing device according to any one of Items (2) to (5), in which the metadata includes information representing whether a still image available for a thumbnail is extractable from the images at the single frame rate obtained through conversion by the single frame rate conversion unit.
(7) The information processing device according to any one of Items (2) to (6), in which the arrangement unit arranges the metadata to an MPD file.
(8) The information processing device according to any one of Items (2) to (6), in which the arrangement unit arranges the metadata to an MP4 file.
(9) The information processing device according to Item (2), further including:
a sending unit configured to send content including the metadata arranged by the arrangement unit and the images encoded.
(10) An information processing method including:
by an information processing device

generating images at a plurality of different low frame rates from an input image;
converting the images at the plurality of different low frame rates generated to images at a single frame rate; and
encoding the images at the single frame rate obtained through conversion.

(11) An information processing device including:
a prediction mode determination unit configured to allocate, in encoding of image data of a plurality of pictures, an intra area on which intra prediction is performed in an intra allocation direction that is a vertical direction or a horizontal direction, and determine, as an intra prediction mode of a boundary portion of the intra area, a prediction mode in which a pixel adjacent to the intra area is not used on the basis of coordinate information of the intra area that is obtained by moving the intra area in a direction vertical to the intra allocation direction so that all encoding units in the pictures correspond to the intra area.

(12) The information processing device according to Item (11), in which the metadata includes a net frame rate representing the plurality of different low frame rates.

(13) The information processing device according to Item (11) or (12), in which the metadata includes a method for generating the low frame rates.

(14) The information processing device according to any one of Items (11) to (13), in which the metadata includes an original frame rate before the images at the plurality of different low frame rates are generated.

(15) The information processing device according to any one of Items (11) to (14), in which the metadata includes information representing whether a still image available for a thumbnail is extractable from the images at the single frame rate obtained through conversion.

(16) The information processing device according to any one of Items (11) to (15), in which the metadata is arranged to an MPD file to be sent.

(17) The information processing device according to any one of Items (11) to (15), in which the metadata is arranged to an MP4 file to be sent.

(18) The information processing device according to any one of Items (11) to (17), further including:

a reception unit configured to receive the content selected by the content selection unit.

(19) An information processing method including:

by an information processing device

acquiring metadata that is information associated with a frame rate for content that is sent, the content being obtained by generating images at a plurality of different low frame rates from an input image, and by converting the images at the plurality of different low frame rates generated to images at a single frame rate; and selecting, depending on a current transmission bandwidth, content including an image at the single frame rate based on the metadata acquired, the image being obtained by converting an optimum low frame rate image.

[Reference Signs List]

100 distribution system, 101 file generation device, 102 distribution server, 103 reproduction terminal, 104 network, 110 video stream generation unit, 111 audio stream generation unit, 112 content file generation unit, 113 MPD generation unit, 114 communication unit, 121 video metadata acquisition unit, 122 audio metadata acquisition unit, 123 file generation unit, 131 A/D conversion unit, 132 frame rate reduction processing unit, 133 single frame rate conversion processing unit, 134 compression encoding unit, 135 video metadata generation unit, 151 MPD acquisition unit, 152 parsing unit, 153 content file acquisition unit, 154 stream extraction unit, 155 video decoding unit, 156 video output unit, 157 audio decoding unit, 158 audio output unit, 159 control unit, 160 operation unit, 181 switching control unit

**Claims**

1. An information processing device comprising:

   a low frame rate generation unit configured to generate images at a plurality of different low frame rates from an input image;
   a single frame rate conversion unit configured to convert the images at the plurality of different low frame rates, the images being generated by the low frame rate generation unit, to images at a single frame rate; and
   an encoding unit configured to encode the images at the single frame rate obtained through conversion by the single frame rate conversion unit.

2. The information processing device according to claim 1, further comprising:
   an arrangement unit configured to arrange information associated with a frame rate as metadata for the images encoded.

3. The information processing device according to claim 2, wherein the metadata includes a net frame rate representing the plurality of different low frame rates generated by the low frame rate generation unit.

4. The information processing device according to claim 3, wherein the metadata includes a method for generating the low frame rates by the low frame rate generation unit.

5. The information processing device according to claim 3, wherein the metadata includes an original frame rate before the images at the low frame rates are generated by the low frame rate generation unit.

6. The information processing device according to claim 3, wherein the metadata includes information representing whether a still image available for a thumbnail is extractable from the images at the single frame rate obtained through conversion by the single frame rate conversion unit.

7. The information processing device according to claim 3, wherein the arrangement unit arranges the metadata to an MPD file.

8. The information processing device according to claim 3, wherein the arrangement unit arranges the metadata to an MP4 file.

9. The information processing device according to claim 3, further comprising:
a sending unit configured to send content including the metadata arranged by the arrangement unit and the images encoded.

10. An information processing method comprising:
by an information processing device

generating images at a plurality of different low frame rates from an input image;
converting the images at the plurality of different low frame rates generated to images at a single frame rate; and
encoding the images at the single frame rate obtained through conversion.

11. An information processing device comprising:

an acquisition unit configured to acquire metadata that is information associated with a frame rate for content that is sent, the content being obtained by generating images at a plurality of different low frame rates from an input image, and by converting the images at the plurality of different low frame rates generated to images at a single frame rate; and
a content selection unit configured to select, depending on a current transmission bandwidth, content including an image at the single frame rate based on the metadata acquired by the acquisition unit, the image being obtained by converting an optimum low frame rate image.

12. The information processing device according to claim 11, wherein the metadata includes a net frame rate representing the plurality of different low frame rates.

13. The information processing device according to claim 12, wherein the metadata includes a method for generating the low frame rates.

14. The information processing device according to claim 12, wherein the metadata includes an original frame rate before the images at the plurality of different low frame rates are generated.

15. The information processing device according to claim 12, wherein the metadata includes information representing whether a still image available for a thumbnail is extractable from the images at the single frame rate obtained through conversion.

16. The information processing device according to claim 12, wherein the metadata is arranged to an MPD file to be sent.

17. The information processing device according to claim 12, wherein the metadata is arranged to an MP4 file to be sent.

18. The information processing device according to claim 12, further comprising:
a reception unit configured to receive the content selected by the content selection unit.

19. An information processing method comprising:
by an information processing device

acquiring metadata that is information associated with a frame rate for content that is sent, the content being obtained by generating images at a plurality of different low frame rates from an input image, and by converting the images at the plurality of different low frame rates generated to images at a single frame rate; and selecting, depending on a current transmission bandwidth, content including an image at the single frame rate based on the metadata acquired, the image being obtained by converting an optimum low frame rate image.

# FIG.1

FILE GENERATION DEVICE ~2

3

Web SERVER

MPD FILE

SEGMENT GROUP AT BIT RATE #1

SEGMENT GROUP AT BIT RATE #2

SEGMENT GROUP AT BIT RATE #3

4

ACQUIRE MPD FILE

INTERNET

REQUEST/DISTRIBUTE NECESSARY DATA BASED ON INFORMATION IN MPD FILE

HTTP/1.1

1

REPRODUCTION TERMINAL ~5

SOFTWARE FOR STREAMING DATA CONTROL ~6

8

CLIENT SOFTWARE FOR HTTP ACCESS

7

MOVING IMAGE REPRODUCTION SOFTWARE

REPRODUCE MOVING IMAGE

→ SEGMENT INDEX

→ SUBSEGMENT

→ SEGMENT

EP 3 579 564 A1

# FIG.2

```
Media Presentation
┌──────────────────────┐
│ Period,start=0s      │
│                      │
│ ...                  │
├──────────────────────┤
│ Period,start=100s    │
│                      │
│ ...                  │
├──────────────────────┤
│ Period,start=295s    │
│                      │
│ ...                  │
└──────────────────────┘
        ...
```

```
Period,
·start=100
·baseURL=http://www.e.com/
        ...
┌──────────────────────────┐
│ Representation1          │
│ 500kbit/s               │
├──────────────────────────┤
│ Representation2          │
│ 100kbit/s               │
└──────────────────────────┘
        ...
```

```
Representation1
·bandwidth=500kbit/s
·width 640,height 480
        ...
┌──────────────────────────┐
│ Segment Info            │
│ duration=10s            │
│                         │
│ Template:               │
│ /ahs-5-SIndex.3gs       │
└──────────────────────────┘
```

```
Segment Info
├──────────────────────────────────┤
│ Initialization Segment           │
│ http://www.e.com/ahs-5-3gp       │
├──────────────────────────────────┤
│ Media Segment1                   │
│ start=0s                         │
│ http://www.e.com/ahs-5-1.3gm     │
├──────────────────────────────────┤
│ Media Segment2                   │
│ start=10s                        │
│ http://www.e.com/ahs-5-2.3gm     │
├──────────────────────────────────┤
│ Media Segment3                   │
│ start=20s                        │
│ http://www.e.com/ahs-5-3.3gm     │
├──────────────────────────────────┤
│              .                   │
│              .                   │
│              .                   │
│              .                   │
├──────────────────────────────────┤
│ Media Segment20                  │
│ start=190s                       │
│ http://www.e.com/ahs-5-20.3gm    │
└──────────────────────────────────┘
```

EP 3 579 564 A1

# FIG.3

period ——————→   period ——————→

From the same
Media content {
| representation | representation |
| representation | representation |

| segment | segment | segment | segment |

Time ——————→

# FIG.4

```
┌─────────────────────────────────────────────────────────────┐
│ ┌─────────┐                                                   │        INFORMATION REGARDING PROGRAM (PAIR OF
│ │MPD FILE │                                                   │───────  MOVING IMAGE OR SOUND DATA ITEMS
│ └─────────┘                          ┌────────────┐           │──────→  SYNCHRONIZED WITH EACH OTHER, FOR EXAMPLE)
│                                      │  Period    │           │
│                                      └────────────┘           │
│  ┌──────────────────────────────────────────────────────┐    │        GROUP SELECTED RANGE OF STREAM
│  │                              ┌─────────────────┐       │    │──────→  (Representation GROUP)
│  │                              │ AdaptationSet   │       │    │
│  │                              └─────────────────┘       │    │
│  │  ┌────────────────────────────────────────────────┐   │    │        INFORMATION SUCH AS MOVING IMAGE
│  │  │                        ┌──────────────────┐     │   │    │──────→  OR SOUND ENCODING RATE AND
│  │  │                        │  Representation  │     │   │    │         MOVING IMAGE OR IMAGE SIZE
│  │  │                        └──────────────────┘     │   │    │
│  │  │  ┌──────────────────────────────────────────┐  │   │    │        INFORMATION ASSOCIATED WITH MOVING
│  │  │  │                 ┌──────────────┐          │  │   │    │──────→  IMAGE OR SOUND SEGMENT
│  │  │  │                 │ SegmentInfo  │          │  │   │    │
│  │  │  │                 └──────────────┘          │  │   │    │
│  │  │  │  ┌────────────────────────────┐           │  │   │    │        INITIALIZATION INFORMATION SUCH AS
│  │  │  │  │  Initialization Segment    │           │  │   │    │──────→  DATA COMPRESSION METHOD
│  │  │  │  └────────────────────────────┘           │  │   │    │
│  │  │  │  ┌────────────────────────────┐           │  │   │    │
│  │  │  │  │     Media Segment          │           │  │   │    │──────→  MOVING IMAGE OR SOUND SEGMENT
│  │  │  │  └────────────────────────────┘           │  │   │    │
│  │  │  └──────────────────────────────────────────┘  │   │    │
│  │  └────────────────────────────────────────────────┘   │    │
│  └──────────────────────────────────────────────────────┘    │
└─────────────────────────────────────────────────────────────┘
```

EP 3 579 564 A1

# F I G . 5

STREAMS HAVING DIFFERENT STREAM ATTRIBUTES AND SAME CONTENT

MPD

| Period | | | Period | |
|---|---|---|---|---|
| Segment | Segment | | Segment | Segment |

AdaptationSet
Representation
Representation

AdaptationSet
Representation
Representation

EP 3 579 564 A1

# FIG.6

STREAM A

STREAM B

STREAM C

A

60p

30p

20p

15p

B

FIG.7

EP 3 579 564 A1

# FIG.8

FRAME THAT IS
DISPLAYED FIRST
IN SWITCHED-TO
STREAM

A

segment

30p

20p

B

EP 3 579 564 A1

# FIG.9

Shutter speed:1/60

| 1 | 2 | 3 | 4 | 5 | 6 | 7 | 8 | 9 | 10 | 11 | 12 |

TAKE VIDEO AT 60p

60p grid

| 1 | | 3 | | 5 | | 7 | | 9 | | 11 | |

DROP FRAMES FROM 60p TO GENERATE 30p

30p grid

| 1 | 1 | 3 | 3 | 5 | 5 | 7 | 7 | 9 | 9 | 11 | 11 |

REPEAT FRAMES TO ACHIEVE 60p

60p grid

EP 3 579 564 A1

# FIG.10

EP 3 579 564 A1

# FIG.11

Shutter speed:1/60

| 1 | 2 | 3 | 4 | 5 | 6 | 7 | 8 | 9 | 10 | 11 | 12 |

60p grid

TAKE VIDEO AT 60p

| 1+2 | 3+4 | 5+6 | 7+8 | 9+10 | 11+12 |

30p grid

PERFORM 30p CONVERSION INCLUDING SYNTHESIZING TWO FRAMES TO REDUCE CHOPPINESS

Shutter speed:1/30

30p grid

ACHIEVE APPEARANCE CLOSE TO VIDEO TAKEN AT 30p

| 1+2 | 1+2 | 3+4 | 3+4 | 5+6 | 5+6 | 7+8 | 7+8 | 9+10 | 9+10 | 11+12 | 11+12 |

60p grid

REPEAT EACH FRAME TO PERFORM CONVERSION THAT DOUBLES fps. DISPLAY AT 60p

EP 3 579 564 A1

# FIG.12

60p

30p

20p

15p A

15p B

FIG.13

4K/60p    30Mbps

4K/60p    15Mbps

4K/60p    15Mbps (SUBSTANTIALLY 30p)

4K/60p    15Mbps (SUBSTANTIALLY 20p)

EP 3 579 564 A1

EP 3 579 564 A1

# FIG.15

EP 3 579 564 A1

FIG.16

# FIG.17

```
[syntax]
frame_rate_conversion_parameters {          :PARAMETER RELATED TO FRAME RATE CONVERSION
  int16       original_fps_numerator        :NUMERATOR REPRESENTING PRE-CONVERSION FRAME RATE orignal_fps
  int16       original_fps_denominator      :DENOMINATOR REPRESENTING PRE-CONVERSION FRAME RATE orignal_fps
  int16       net_fps_numerator             :NUMERATOR REPRESENTING POST-CONVERSION NET FRAME RATE net_fps
  int16       net_fps_denominator           :DENOMINATOR REPRESENTING POST-CONVERSION NET FRAME RATE net_fps
  int8        conversion_type               :CONVERSION METHOD FOR REDUCING FRAME RATE
  int8        thumbnail_available           :FLAG INDICATING WHETHER DATA IS AVAILABLE FOR STILL IMAGE THUMBNAIL
  int         reserved                      :
}
```

[SEMANTICS OF FIELD]

・PRE-CONVERSION FRAME RATE

    original_fps = original_fps_numerator/original_fps_denominator

・NET FRAME RATE

    net_fps = net_fps_numerator/net_fps_denominator

・coversion_type

0: NO INFORMATION, UNKNOWN 1: SIMPLE FRAME-DROPPING AT REGULAR INTERVALS 2: ADJACENT FRAME SYNTHESIS 3:FRAME REPETITION 4-255: reserved (user defined conversion)

・thumbnail_available

0: NO INFORMATION, UNKNOWN 1: AVAILABLE FOR THUMBNAIL 2: INAPPROPRIATE FOR THUMBNAIL

# FIG.18

```
( START DISTRIBUTION DATA GENERATION PROCESSING )
                          │
                          ▼
        ┌─────────────────────────────────────┐
        │        GENERATE VIDEO STREAM         │  S101
        └─────────────────────────────────────┘
                          │
                          ▼
        ┌─────────────────────────────────────┐
        │        GENERATE AUDIO STREAM         │  S102
        └─────────────────────────────────────┘
                          │
                          ▼
        ┌─────────────────────────────────────┐
        │        GENERATE CONTENT FILE         │  S103
        └─────────────────────────────────────┘
                          │
                          ▼
        ┌─────────────────────────────────────┐
        │          GENERATE MPD FILE           │  S104
        └─────────────────────────────────────┘
                          │
                          ▼
        ┌─────────────────────────────────────┐
        │   UPLOAD MPD FILE AND CONTENT FILE TO│  S105
        │        DISTRIBUTION SERVER           │
        └─────────────────────────────────────┘
                          │
                          ▼
                      ( END )
```

# FIG.19

```
( START VIDEO STREAM GENERATION PROCESSING )
                          │
                          ▼
        ┌─────────────────────────────────────┐
        │        PERFORM A/D CONVERSION        │  S121
        └─────────────────────────────────────┘
                          │
                          ▼
        ┌─────────────────────────────────────┐
        │   PERFORM FRAME RATE REDUCTION PROCESSING │  S122
        └─────────────────────────────────────┘
                          │
                          ▼
        ┌─────────────────────────────────────┐
        │ PERFORM SINGLE FRAME RATE CONVERSION PROCESSING │  S123
        └─────────────────────────────────────┘
                          │
                          ▼
        ┌─────────────────────────────────────┐
        │      PERFORM ENCODING PROCESSING     │  S124
        └─────────────────────────────────────┘
                          │
                          ▼
                    ( RETURN )
```

# FIG.20

```
    ╭─────────────────────────╮
    │  START FRAME RATE        │
    │  REDUCTION PROCESSING    │
    ╰─────────────────────────╯
                 │
                 ▼
```

┌─────────────────────────────────────────┐ S141
│  SET CONVERSION TARGET FRAME RATE VALUE   │
│  SET CONVERSION TARGET FRAME RATE VALUE   │
│         TO METADATA net_fps               │
└─────────────────────────────────────────┘
                 │
                 ▼
┌─────────────────────────────────────────┐ S142
│           INPUT VIDEO SIGNAL              │
└─────────────────────────────────────────┘
                 │
                 ▼
┌─────────────────────────────────────────┐ S143
│  ACQUIRE FRAME RATE VALUE OF INPUT VIDEO SIGNAL │
│    SET ACQUIRED VALUE TO METADATA original_fps  │
└─────────────────────────────────────────┘
                 │
                 ▼
         ⟨ SIMPLE FRAME-DROPPING? ⟩ S144
              │            YES
              │NO          └──────────────┐
                                          ▼
                          ┌─────────────────────────────────┐ S145
                          │  MAKE FRAME DROPPING RULE FROM FRAME │
                          │    RATE VALUE OF INPUT VIDEO AND     │
                          │ CONVERSION TARGET FRAME RATE VALUE, AND │
                          │  DROP FRAMES IN ACCORDANCE WITH RULE │
                          └─────────────────────────────────┘
                 │
                 ▼
         ⟨ ADJACENT FRAME SYNTHESIS? ⟩ S146
              │            YES
              │NO          └──────────────┐
                                          ▼
                          ┌─────────────────────────────────┐ S147
                          │   MAKE FRAME SYNTHESIS RULE FROM  │
                          │    FRAME RATE VALUE OF INPUT VIDEO │
                          │  AND CONVERSION TARGET FRAME RATE │
                          │   VALUE, AND SYNTHESIZE ADJACENT  │
                          │   FRAMES TO GENERATE NEW FRAMES   │
                          └─────────────────────────────────┘
                 │
                 ▼
┌─────────────────────────┐ S148
│    REDUCE FRAME RATE BY  │
│      ANOTHER METHOD      │
└─────────────────────────┘
                 │
                 ▼
┌─────────────────────────────────────────┐ S149
│  STORE FRAME RATE CONVERSION METHOD TO    │
│ METADATA conversion_type, AND DETERMINE AND │
│  SET VALUE OF METADATA thumbnail_available │
│    FROM FRAME RATE CONVERSION METHOD       │
└─────────────────────────────────────────┘
                 │
                 ▼
            ╭─────────╮
            │ RETURN  │
            ╰─────────╯

# FIG.21

```
( START SINGLE FRAME RATE CONVERSION PROCESSING )
                        │
                        ▼
┌──────────────────────────────────────────────┐  S161
│      SET CONVERSION TARGET FRAME RATE VALUE    │
└──────────────────────────────────────────────┘
                        │
                        ▼
┌──────────────────────────────────────────────┐  S162
│                INPUT VIDEO SIGNAL              │
└──────────────────────────────────────────────┘
                        │
                        ▼
┌──────────────────────────────────────────────┐  S163
│            ACQUIRE FRAME RATE VALUE            │
│            OF INPUT VIDEO SIGNAL               │
└──────────────────────────────────────────────┘
                        │
                        ▼
┌──────────────────────────────────────────────┐  S164
│    MAKE FRAME RATE CONVERSION RULE FROM        │
│    FRAME RATE VALUE OF INPUT VIDEO AND         │
│    CONVERSION TARGET FRAME RATE VALUE,         │
│    AND CONVERT SEQUENCE OF FRAMES              │
└──────────────────────────────────────────────┘
                        │
                        ▼
┌──────────────────────────────────────────────┐  S165
│                STORE METADATA                  │
│      frame_rate_conversion_parameters          │
│              IN GIVEN LOCATION                 │
└──────────────────────────────────────────────┘
                        │
                        ▼
                  (  RETURN  )
```

# FIG.22

```
( START MPD FILE GENERATION PROCESSING )
                    │
                    ▼
┌─────────────────────────────────────┐
│      ACQUIRE VIDEO METADATA          │ S181
└─────────────────────────────────────┘
                    │
                    ▼
┌─────────────────────────────────────┐
│      ACQUIRE AUDIO METADATA          │ S182
└─────────────────────────────────────┘
                    │
                    ▼
┌─────────────────────────────────────┐
│         GENERATE MPD FILE            │ S183
└─────────────────────────────────────┘
                    │
                    ▼
              ( RETURN )
```

# FIG.23

id=1, 4K/60p, 30Mbps

id=2, 4K/60p, 15Mbps

id=3, 4K/60p, 15Mbps (SIMPLE FRAME-DROPPING, NET 30p)

id=4, 4K/60p, 15Mbps (SIMPLE FRAME-DROPPING, NET 20p)

id=1 original_fps=60, net_fps=60
id=2 original_fps=60, net_fps=60
id=3 original_fps=60, net_fps=30
id=4 original_fps=60, net_fps=20

EP 3 579 564 A1

# FIG.24

# FIG.25

```
        ┌─────────────────────────────┐
        │    START CONTENT            │
        │  ACQUISITION PROCESSING     │
        └─────────────────────────────┘
                     │
                     ▼
   ┌──────────────────────────────────────┐ S201
   │  ACQUIRE FRAME RATE CONVERSION       │
   │  METADATA OF REPRODUCTION TARGET     │
   └──────────────────────────────────────┘
                     │
                     ▼
     IS THERE STREAM TRANSMITTABLE WITH    S202
     CURRENT TRANSMISSION BANDWIDTH?  ── NO ──┐
                     │ YES                     │
                     │                         ▼
                     │        ┌──────────────────────────────────┐ S203
                     │        │  PERFORM PROCESSING DEPENDENT ON │
                     │        │  IMPLEMENTATION OF PLAYER        │
                     │        │  BECAUSE NO STREAM CAN BE        │
                     │        │  SWITCHING DESTINATION           │
                     │        └──────────────────────────────────┘
                     ▼
     IS ONLY ONE representation AT          S204
     HIGHEST BIT RATE?  ─────────────── NO ──┐
                     │ YES                     │
                     │                         ▼
                     │        ┌──────────────────────────────────┐ S205
                     │        │  SELECT STREAM AT HIGHEST NET     │
                     │        │  FRAME RATE FROM STREAMS AT NET   │
                     │        │  FRAME RATES EQUAL TO OR LOWER    │
                     │        │  THAN DISPLAY FRAME RATE OF CLIENT│
                     │        └──────────────────────────────────┘
                     ▼
   ┌──────────────────────────┐ S206
   │  SELECT STREAM AT        │
   │  HIGHEST BIT RATE        │
   └──────────────────────────┘
                     │
                     ▼
  NO ── END CONTENT FILE ACQUISITION?      S207
                     │ YES
                     ▼
              ┌──────────┐
              │   END    │
              └──────────┘
```

# FIG.26

```
        ┌─────────────────────────┐
        │  START THUMBNAIL IMAGE   │
        │  GENERATION PROCESSING   │
        └─────────────────────────┘
                     │
                     ▼
     ╱────────────────────────────────╲          S221
    ╱   IS VALUE OF thumbnail_available OF ╲
    ╲  FRAME RATE CONVERSION METADATA 1?  ╱─────── NO
     ╲────────────────────────────────╱
                     │ YES                          │
                     ▼                              │
    ┌──────────────────────────────────┐  S222     │
    │ EXTRACT ONE FRAME FROM STREAM TO  │           │
    │ SET FRAME AS THUMBNAIL IMAGE      │           │
    │ REPRESENTING CONTENT             │           │
    └──────────────────────────────────┘           │
                     │                              ▼
                     │            ┌──────────────────────────────┐ S223
                     │            │   GENERATE THUMBNAIL IMAGE     │
                     │            │ REPRESENTING CONTENT WITH TEXT │
                     │            │  (CHARACTERS) OR CG WITHOUT     │
                     │            │ EXTRACTING FRAME FROM STREAM    │
                     │            └──────────────────────────────┘
                     │                              │
                     ◄──────────────────────────────┘
                     ▼
              ┌─────────────┐
              │     END     │
              └─────────────┘
```

# FIG.27

```
schemeIdUri = "urn:mpeg:dash:frame_rate_conversion_parameters:2016"
value = "(AdaptationSet_id), (Representation_id),original_fps,net_fps,conversion_type,
thumbnail_available"
```

# FIG.28

```
<MPD>
<Period>
<AdaptationSet>
  <Representation id="1" bandwidth="30000000" frameRate="60" width="3840" height="2160">
    <EssentialProperty schemeIdUri ="urn:mpeg:dash:frame_rate_conversion_parameters:2016" value="60,60,1,1"/>
    <BaseURL>100.mp4</BaseURL> </Representation>
  <Representation id="2" bandwidth="15000000" frameRate="60" width="3840" height="2160">
    <EssentialProperty schemeIdUri ="urn:mpeg:dash:frame_rate_conversion_parameters:2016" value="60,30,1,1"/>
    <BaseURL>101.mp4</BaseURL> </Representation>
  <Representation id="3" bandwidth="15000000" frameRate="60" width="3840" height="2160">
    <EssentialProperty schemeIdUri ="urn:mpeg:dash:frame_rate_conversion_parameters:2016" value="60,15,1,1"/>
    <BaseURL>102.mp4</BaseURL> </Representation>
</AdaptationSet>
</Period>
</MPD>
```

EP 3 579 564 A1

# FIG.29

```
<MPD>
<Period>
<AdaptationSet>
 <EssentialProperty schemeIdUri ="urn:mpeg:dash:frame_rate_conversion_parameters:2016" value="1,60,60,1,1"/>
 <EssentialProperty schemeIdUri ="urn:mpeg:dash:frame_rate_conversion_parameters:2016" value="2,60,30,1,1"/>
 <EssentialProperty schemeIdUri ="urn:mpeg:dash:frame_rate_conversion_parameters:2016" value="3,60,15,1,1"/>
  <Representation id="1" bandwidth="30000000" frameRate="60" width="3840" height="2160">
    <BaseURL>100.mp4</BaseURL> </Representation>
  <Representation id="2" bandwidth="15000000" frameRate="60" width="3840" height="2160">
    <BaseURL>101.mp4</BaseURL> </Representation>
  <Representation id="3" bandwidth="15000000" frameRate="60" width="3840" height="2160">
    <BaseURL>102.mp4</BaseURL> </Representation>
</AdaptationSet>
</Period>
</MPD>
```

EP 3 579 564 A1

# FIG.30

```
<MPD>
<Period>
 <EssentialProperty schemeIdUri ="urn:mpeg:dash:frame_rate_conversion_parameters:2016"value="1,1,60,60,1,1"/>
 <EssentialProperty schemeIdUri ="urn:mpeg:dash:frame_rate_conversion_parameters:2016"value="1,2,60,30,1,1"/>
 <EssentialProperty schemeIdUri ="urn:mpeg:dash:frame_rate_conversion_parameters:2016"value="1,3,60,15,1,1"/>
<AdaptationSet  id="1">
 <Representation id="1"bandwidth="30000000"frameRate="60"width="3840"height="2160">
  <BaseURL>100.mp4</BaseURL> </Representation>
 <Representation id="2"bandwidth="15000000"frameRate="60"width="3840"height="2160">
  <BaseURL>101.mp4</BaseURL> </Representation>
 <Representation id="3"bandwidth="15000000"frameRate="60"width="3840"height="2160">
  <BaseURL>102.mp4</BaseURL> </Representation>
</AdaptationSet>
</Period>
</MPD>
```

# FIG.31

```
Box Type: 'frcp'
Container: User data box ('udta')
Mandatory: No
Quantity: Zero or more


aligned(8) class FrameRateConversionParametersBox extends FullBox('frcp', version = 0, 0) {
  int16      original_fps_numerator
  int16      original_fps_denominator
  int16      net_fps_numerator
  int16      net_fps_denominator
  int8       conversion_type
  int8       thumbnail_available
  int        reserved
}
```

# FIG.32

MP4 FILE

A IS METADATA THAT IS APPLIED TO
VIDEO FRAMES IN THIS RANGE

video track

metatada track

Ⓐ frame_rate_conversion_parameters()    Ⓑ frame_rate_conversion_parameters()

sample_duration      sample_duration

time

# FIG.33

| INTERNATIONAL SEARCH REPORT | International application No. |
|---|---|
| | PCT/JP2018/001315 |

| A. CLASSIFICATION OF SUBJECT MATTER |
|---|
| Int.Cl. H04N21/2343(2011.01)i, H04N5/765(2006.01)i, H04N19/85(2014.01)i |

According to International Patent Classification (IPC) or to both national classification and IPC

| B. FIELDS SEARCHED |
|---|
| Minimum documentation searched (classification system followed by classification symbols)<br>Int.Cl. H04N21/2343, H04N5/765, H04N19/85 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2015-518350 A (VID SCALE, INC.) 25 June 2015, paragraph [0118]<br>& US 2013/0282917 A1, paragraph [0159] & WO 2013/163224 A1 & EP 2842338 A1 & KR 10-2015-0004394 A & CN 104509119 A & TW 1414254 A & KR 10-2016-0063405 A | 1-19 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.02.2018 | 20.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2018/001315

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-171472 A (HITACHI, LTD.) 30 July 2009, paragraphs [0046]-[0048] (Family: none) | 1-19 |

Form PCT/ISA/210 (continuation of second sheet) (January 2015)